(19) **Europäisches Patentamt European Patent Office Office européen des brevets**

(11) **EP 4 510 675 A1**

(12) **EUROPEAN PATENT APPLICATION**
published in accordance with Art. 153(4) EPC

(43) Date of publication:
**19.02.2025 Bulletin 2025/08**

(21) Application number: **23794847.6**

(22) Date of filing: **17.03.2023**

(51) International Patent Classification (IPC):
**H04W 16/28** (2009.01)

(52) Cooperative Patent Classification (CPC):
**H04W 16/28; H04W 24/08; H04W 72/044**

(86) International application number:
**PCT/CN2023/082226**

(87) International publication number:
**WO 2023/207412 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210460677**

(71) Applicant: **ZTE Corporation**
**Shenzhen, Guangdong 518057 (CN)**

(72) Inventors:
• **LIU, Wenfeng**
  **Shenzhen, Guangdong 518057 (CN)**

• **XIAO, Huahua**
  **Shenzhen, Guangdong 518057 (CN)**
• **LU, Zhaohua**
  **Shenzhen, Guangdong 518057 (CN)**
• **ZHENG, Guozeng**
  **Shenzhen, Guangdong 518057 (CN)**
• **WANG, Yuxin**
  **Shenzhen, Guangdong 518057 (CN)**
• **LI, Yong**
  **Shenzhen, Guangdong 518057 (CN)**

(74) Representative: **Betten & Resch**
**Patent- und Rechtsanwälte PartGmbB**
**Maximiliansplatz 14**
**80333 München (DE)**

(54) **BEAM MANAGEMENT METHOD, USER DEVICE, BASE STATION, STORAGE MEDIUM, AND PROGRAM PRODUCT**

(57) Disclosed in the present application are a beam management method, a device, a storage medium, and a program product. The beam management method is applied to a receiving device, and comprises: receiving beam reporting indication information sent by a transmitting device and a plurality of test beams configured with reference signal resources; measuring the plurality of reference signal resources to obtain a plurality of pieces of beam measurement information; selecting target measurement information from among the plurality of pieces of beam measurement information according to the beam reporting indication information; and sending the target measurement information to the transmitting device, such that the transmitting device predicts and obtains an optimal beam result according to the target measurement information.

Receive, from a transmitting apparatus, beam reporting indication information and a plurality of test beams configured with reference signal resources — S110

Measure the plurality of reference signal resources to obtain a plurality of pieces of beam measurement information — S120

Select target measurement information from the plurality of pieces of beam measurement information according to the beam reporting indication information — S130

Send the target measurement information to the transmitting apparatus, such that the transmitting apparatus predicts an optimal beam result according to the target measurement information — S140

FIG. 2

## Description

## CROSS-REFERENCE TO RELATED APPLICATION

This application is filed on the basis of Chinese patent application No. 202210460677.8 filed April 28, 2022, and claims priority of the Chinese patent application, the entire contents of which are incorporated herein by reference.

## TECHNICAL FIELD

The present disclosure relates to the technical field of communication, and in particular, to a method for beam management, a user apparatus, a base station, a computer-readable storage medium, and a computer program product.

## BACKGROUND

At present, beam prediction based on a configuration model is performed on the base station side to achieve beam alignment between the user side and the base station side. This process requires sufficient beam reporting information as model inputs, so the user side needs to report a large amount of Channel State Information (CSI) feedback quantity parameters to the base station, leading to high signaling overheads and increasing the burden of uplink transmission of the user side.

## SUMMARY

The following is a summary of the subject matter set forth in this description. This summary is not intended to limit the scope of protection of the claims.

Provided are a method for beam management, a user apparatus, a base station, a computer-readable storage medium, and a computer program product, in some embodiments of the present disclosure, in order to reduce beam reporting overheads.

In accordance with a first aspect of the present disclosure, a method for beam management is provided. The method is applied to a receiving apparatus, and includes:

receiving, from a transmitting apparatus, beam reporting indication information and a plurality of test beams configured with reference signal resources;

measuring a plurality of reference signal resources to obtain a plurality of pieces of beam measurement information;

selecting target measurement information from the plurality of pieces of beam measurement information according to the beam reporting indication information; and

sending the target measurement information to the transmitting apparatus, such that the transmitting apparatus predicts an optimal beam result according to the target measurement information.

In accordance with a second aspect of the present disclosure, another method for beam management is provided. The method is applied to a transmitting apparatus, and includes:

sending, to a receiving apparatus, beam reporting indication information and a plurality of test beams configured with a plurality of reference signal resources;

receiving target measurement information sent by the receiving apparatus, where the target measurement information is selected by the receiving apparatus from a plurality of pieces of beam measurement information according to the beam reporting indication information, and the beam measurement information is obtained by the receiving apparatus by measuring a plurality of reference signal resources; and

predicting an optimal beam result according to the target measurement information.

In accordance with a third aspect of the present disclosure, a user apparatus is provided. The user apparatus includes: at least one processor; and at least one memory, configured for storing at least one program, where the at least one program, when executed by the at least one processor, causes the at least one processor to implement the method for beam management in accordance with the first aspect.

In accordance with a fourth aspect of the present disclosure, a base station is provided. The base station includes: at least one processor; and at least one memory, configured for storing at least one program, where the at least one program, when executed by the at least one processor, causes the at least one processor to implement the method for beam management in accordance with the second aspect.

In accordance with a fifth aspect of the present disclosure, a computer-readable storage medium is provided. The computer-readable storage medium storing a processor-executable program which, when executed by a processor, causes the processor to implement the method for beam management described above.

In accordance with a sixth aspect of the present disclosure, a computer program product is provided. The computer program product includes a computer program, or a computer instruction stored in a computer-readable storage medium which, when read from the computer-readable storage medium and executed by a processor of a computer device, causes the computer device to implement the method for beam management described above.

In various embodiments of the present disclosure, the receiving apparatus obtains a plurality of pieces of beam measurement information by measuring reference signal resources configured for test beams from the transmitting apparatus, and may select target measurement information to be reported to the transmitting apparatus from the plurality of pieces of beam measurement information according to beam reporting indication information from the transmitting apparatus. In other words, the receiving apparatus does not need to send all the beam measurement information obtained through measurement to the transmitting apparatus, but instead, selects and sends part of the beam measurement information, such that the beam reporting overheads and uplink transmission burden can be reduced. In addition, the reported part of the beam measurement information can also assist the transmitting apparatus in performing beam prediction, and the beam prediction performance of the transmitting apparatus is not affected. As such, beam training overheads, measurement power consumption, and processing delay can be reduced. To sum up, beam reporting overheads on the receiving apparatus side can be reduced while ensuring the beam prediction performance on the transmitting apparatus side. Therefore, the present disclosure can fill in the technical gap in related methods.

The above embodiments and other aspects and implementations of the present disclosure will be further described in conjunction with the drawings, detailed description, and claims.

## BRIEF DESCRIPTION OF DRAWINGS

FIG. 1 is a schematic diagram of an environment where a method for beam management according to an embodiment of the present disclosure may be carried out;

FIG. 2 is a flowchart of a method for beam management according to an embodiment of the present disclosure;

FIG. 3 is a schematic diagram of selecting target measurement information according to an embodiment of the present disclosure;

FIG. 4 is a schematic diagram of selecting target measurement information according to another embodiment of the present disclosure;

FIG. 5 is a schematic diagram of selecting target measurement information according to another embodiment of the present disclosure;

FIG. 6 is a schematic diagram of selecting target measurement information according to another embodiment of the present disclosure;

FIG. 7 is a flowchart of selecting target measurement information according to an embodiment of the present disclosure;

FIG. 8 is a flowchart of binding each of the plurality of pieces of beam measurement information to a neighborhood subset index in a method for beam management according to an embodiment of the present disclosure;

FIG. 9 is a schematic diagram of selecting target measurement information according to another embodiment of the present disclosure;

FIG. 10 is a schematic diagram of selecting target measurement information according to another embodiment of the present disclosure;

FIG. 11 is a flowchart of selecting target measurement information according to another embodiment of the present disclosure;

FIG. 12 is a flowchart of grouping the plurality of pieces of beam measurement information into test beam subsets in a beam management method according to another embodiment of the present disclosure;

FIG. 13 is a flowchart of a method for beam management according to another embodiment of the present disclosure;

FIG. 14 is a schematic diagram of a user apparatus according to an embodiment of the present disclosure; and

FIG. 15 is a schematic diagram of a base station according to an embodiment of the present disclosure.

## DETAILED DESCRIPTION

To make the objects, technical schemes, and advantages of the present disclosure clear, the present disclosure is described in further detail in conjunction with accompanying drawings and examples. It should be understood that the specific embodiments described herein are merely intended for illustrating the present disclosure, and are not intended to limit the present disclosure.

It is to be noted, although logical orders have been shown in the flowcharts, in some cases, the operations shown or described may be executed in an order different from the orders as shown in the flowcharts. The terms such as "first", "second" and the like in the description, the claims, and the accompanying drawings are intended to distinguish similar objects, and are not necessarily intended to describe a specific sequence or a precedence order.

Provided are a method for beam management, a user apparatus, a base station, a computer-readable storage medium, and a computer program product in some embodiments of the present disclosure. According to an embodiment, a method for beam management is provided. The method is applied to a receiving apparatus. The method includes: receiving, from a transmitting apparatus, beam reporting indication information and a plurality of test beams configured with reference signal resources; measuring a plurality of reference signal resources to obtain a plurality of pieces of beam measurement information; selecting target measurement information from the plurality of pieces of beam measurement information according to the beam reporting indication information; and sending the target measurement information to the transmitting apparatus, such that the transmitting apparatus predicts an optimal beam result according to the target measurement information. In this embodiment, the receiving apparatus obtains a plurality of pieces of beam measurement information by measuring reference signal resources configured for test beams from the transmitting apparatus, and may select target measurement information to be reported to the transmitting apparatus from the plurality of pieces of beam measurement information according to beam reporting indication information from the transmitting apparatus. In other words, the receiving apparatus does not need to send all the beam measurement information obtained through measurement to the transmitting apparatus, but instead, selects and sends part of the beam measurement information, such that the beam reporting overheads and uplink transmission burden can be reduced. In addition, the reported part of the beam measurement information can also assist the transmitting apparatus in performing beam prediction, and the beam prediction performance of the transmitting apparatus is not affected. As such, beam training overheads, measurement power consumption, and processing delay can be reduced. To sum up, beam reporting overheads on the receiving apparatus side can be reduced while ensuring the beam prediction performance on the transmitting apparatus side. Therefore, the present disclosure can fill in the technical gap in related methods.

The embodiments of the present disclosure will be further described in detail below with reference to the accompanying drawings.

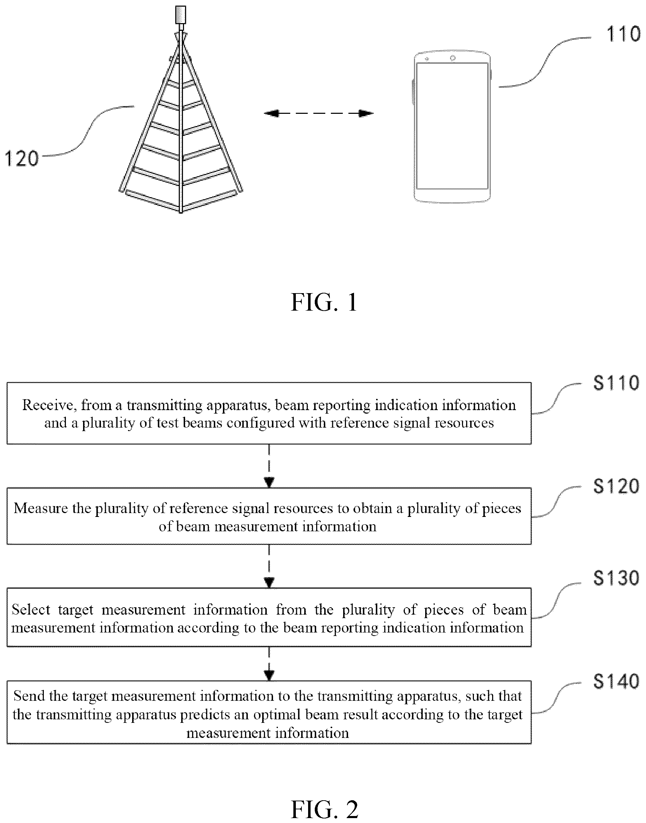

FIG. 1 is a schematic diagram of an implementation environment in which a method for beam management according to an embodiment of the present disclosure may be performed.

In the example of FIG. 1, the implementation environment includes a user apparatus 110 and a base station 120. The user apparatus 110 and the base station 120 can send wireless signals to each other and receive wireless signals from each other.

It should be noted that the relative positions of the base station 120 and the user apparatus 110 may be set according to specific application scenarios. For example, the user apparatus 110 may move along a radiation sphere formed as the base station 120 radiates signals externally. In other words, if there are a plurality of user apparatuses 110 and different user apparatuses 110 are arranged in the above manner, the wireless signal sent by the base station 120 can be received at different spatial positions. It should be noted that the spatial positions may be different geographical locations.

In an implementation, the user apparatus 110 may be referred to as an access terminal device, a User Equipment (UE), a subscriber unit, a subscriber station, a mobile station, a remote station, a remote terminal device, a mobile device, a user terminal device, a wireless communication device, a user agent, or a user device. For example, the user apparatus 110 may be a cellular phone, a cordless telephone, a Session Initiation Protocol (SIP) telephone, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5G network or future evolved networks, etc., which is not limited in this embodiment.

It should be noted that the environment where the method for beam management is carried out, can be applied to a 3rd Generation Partnership Project (3GPP) architecture. The 3GPP has formulated a complete set of beam management procedures for adjusting the beam direction of high frequency bands and maintaining an appropriate transmitting-receiving beam pair, including beam sweeping, beam measurement, beam reporting, beam indication, etc. For example, in a transmitting beam sweeping process, the base station 120 sends beams at a set of predetermined intervals and directions, the user apparatus 110 measures reference signal resources carried on the transmitting beams and reports beam quality information to the base station 120, and finally the base station 120 determines an optimal beam and establishes a directional communication link. The base station configures one or more reference signal resource settings for each user apparatus 110 in a channel state information instance CSI-ResourceConfig, and configures one or more CSI reporting settings for each user apparatus 110 in a higher-layer parameter, i.e., *CSI-ReportConfig*. *CSI-ResourceConfig* configures reference signal resources for channel measurement or interference measurement, including a Channel State Information Reference Signal (CSI-RS) resource and a Synchronization Signal and Physical Broadcast Channel (PBCH) Block (SSB) resource for channel measurement, and a CSI Interference Measurement (CSI-IM) resource for interference measurement. *CSI-ReportConfig* configures parameters related to CSI reporting, including codebook type, frequency-domain reporting granularity, measurement limit configuration, and CSI-related feedback quantity, such as layer indicator, CSI-RS Resource Indicator (CRI), SSB Resource Indicator (SSBRI), physical layer reference signal receiving power, i.e., L1 Reference Signal Receiving Power (L1-RSRP), physical layer SINR, i.e., L1 Signal to Interference plus Noise Ratio (L1-SINR), etc. In New Radio (NR), L1-RSRP serves as a reporting parameter of beam measurement, and the reporting of beam-related information is implemented within the architecture of CSI feedback. In the beam measurement, a CSI feedback quantity parameter, i.e., *reportQuantity* in the CSI reporting setting is configured as "CRI-RSRP" or "SSB-Index-RSRP". In this case, the user apparatus 110 needs to report a reference signal resource index CRI/SSBRI and an RSRP. CRI/SSBRI represents an index of a CSI-RS resource selected by the user apparatus 110 in a resource set, and RSRP represents quality information of the measured beam. It should be noted that the number of measurement reference signal resources and the number of RSRPs that can be reported in one reporting setting depend on the capability of the user apparatus 110, or may be selectively adjusted according to an actual application scenario.

In an implementation, beam sweeping may refer to a process in which the base station 120 or the user apparatus 110 sequentially uses different analog beams to cover a spatial area. During beam sweeping, the base station 120 or the user apparatus 110 sequentially sends beams from an entire codebook or a subset of the codebook to find a desirable transmitting-receiving beam pair for data and control channels. In the transmitting-end beam sweeping process, the base station 120 may configure, for example, but not limited to, higher-layer parameter resource sets, i.e., the *NZP-CSI-RS-ResourceSet,* with each set including a plurality of CSI-RS and/or SSB resources transmitted using different transmitting beams. The user apparatus 110 may receive and measure the CSI-RS and/or SSB resources by means of a fixed receiving beam to implement the measurement process of the transmitting beams. In addition, the user apparatus 110 may adopt a round-robin method to receive the test beams sent by the base station 120, i.e., the base station 120 repeatedly transmits the CSI-RS resource or set for beam management for a plurality of times, and the user apparatus 110 respectively uses different receiving beams for reception, thus realizing sweeping of the receiving beams.

In another implementation, during beam sweeping at a receiving end, the base station 120 configures higher-layer parameter resource sets, i.e., the *NZP-CSI-RS-ResourceSet,* each including a plurality of CSI-RS and/or SSB resources transmitted by means of the same transmitting beam. In this case, the user apparatus 110 may, for example, but not limited to, receive, and measure the CSI-RS and/or SSB resources by means of different receiving beams, thus realizing sweeping of the receiving beams. In addition, the base station 120 may adopt a round-robin method to send the test beams as required, i.e., to configure a plurality of CSI-RS resources and/or SSB resource sets transmitted by means of different transmitting beams, so as to facilitate sweeping of the transmitting beams.

The user apparatus 110 has at least functions such as receiving from the base station 120, beam reporting indication information and a plurality of test beams configured with reference signal resources, measuring a plurality of reference signal resources to obtain a plurality of pieces of beam measurement information, selecting target measurement information from the plurality of pieces of beam measurement information, and sending the target measurement information to the base station 120. The target measurement information can enable the base station 120 to predict an optimal beam result according to the target measurement information.

The base station 120 has at least functions such as performing beam management based on a preset operation logic or based on the control of operation personnel. For example, the base station 120 has at least functions of predicting and managing an optimal beam result. In other words, based on the preset operation logic or based on the control of operation personnel, the base station 120 can send beam reporting indication information and a plurality of test beams configured with reference signal resources to the user apparatus 110, receive target measurement information sent by the user apparatus 110, and predict an optimal beam result based on the target measurement information. The target measurement information is selected by the user apparatus 110 from a plurality of pieces of beam measurement information according to the beam reporting indication information, and the beam measurement information is obtained by the user apparatus 110 by measuring a plurality of reference signal resources. It should be noted that the base station 120 may be an ordinary mobile communication base station or a millimeter-wave Active Antenna System (AAS) base station, which is not particularly limited herein.

It should be noted that the above functions of the base station 120 and the user apparatus 110 may be applied to different application scenarios, which is not limited herein.

It can be understood by those having ordinary skills in the art that the implementation environment may be applied to 5G and 6G communication network systems, future evolved mobile communication network systems, etc., which is not particularly limited in this embodiment.

Those having ordinary skills in the art may understand that the implementation environment shown in FIG. 1 does not constitute a limitation to the embodiments of the present disclosure, and more or fewer components than those shown in the figure may be included, or some components may be combined, or a different component arrangement may be used.

Based on the above implementation environment, various embodiments of the method for beam management of the present disclosure are proposed below.

FIG. 2 is a flowchart of a method for beam management according to an embodiment of the present disclosure. The method is applied to a receiving apparatus, such as the user apparatus 110 in the embodiment shown in FIG. 1. The method may include, but not limited to, the following operations S110 to S140.

At S110, beam reporting indication information and a plurality of test beams configured with reference signal resources are received from a transmitting apparatus.

It should be noted that the receiving apparatus in this embodiment may be, but not limited to, the user apparatus 110 in the embodiment shown in FIG. 1, and the transmitting apparatus in this embodiment may be, but not limited to, the base station 120 in the embodiment shown in FIG. 1. Alternatively, those having ordinary skills in the art may set the corresponding transmitting apparatus or receiving apparatus according to actual application scenarios, which is not limited in this embodiment. To more conveniently describe the application scenarios and principles of the present disclosure, related embodiments are described below by means of a user apparatus as the receiving apparatus and a base station as the transmitting apparatus, but such embodiments should not be construed as a limitation to the embodiments of the present disclosure.

In this operation, the beam reporting indication information and the plurality of test beams configured with the reference signal resources are received from the base station, such that in subsequent operations, target measurement information to be sent to the base station can be selected according to the reference signal resources and the beam reporting indication information, so as to reduce beam reporting overheads.

It should be noted that the transmission mode, number, directions, etc., of the test beams of the base station are determined based on a preset operation logic or configured based on the control of operation personnel, and the details will not be described herein. Regardless of how the base station sends the test beams to the user apparatus, the user apparatus can execute subsequent operation based on the received beam reporting indication information and the received plurality of test beams configured with reference signal resources. The subsequent operation may be executed in various manners, which will be respectively described below through specific implementations.

It should be noted that the plurality of test beams may be different from each other to simulate sweeping of different beams, or may be the same to simulate different sweeping cases of the same beam. In other words, the specific number, type, etc., of the test beams may be set according to actual application scenarios, which is not limited herein.

It should be noted that the reference signal resource includes at least one of:

a CSI-RS resource; or
an SSB resource.

In other words, the configured reference signal resources may be CSI-RS resources and/or SSB resources, and the resources are configured to realize beam measurement and sweeping on the user apparatus side. The CSI-RS resources and SSB resources are well known to those having ordinary skills in the art and have been described in the foregoing embodiments, so the details will not be described herein.

It should be noted that the beam reporting indication information includes at least one of:

indication information for indicating a number of pieces of beam measurement information to be reported;

indication information for indicating reporting of the beam measurement information that satisfies a preset threshold condition, where the preset threshold condition includes a preset quality threshold condition or a preset quality ratio threshold condition;

indication information for indicating reporting of the beam measurement information that satisfies a preset neighborhood factor condition;

indication information for indicating reporting of the beam measurement information that satisfies a preset neighborhood subset index condition; or

indication information for indicating reporting of the beam measurement information from a plurality of dimensions.

The indication information for indicating the number of pieces of beam measurement information to be reported, the indication information for indicating reporting of the beam measurement information that satisfies the preset threshold condition, the indication information for indicating reporting of the beam measurement information that satisfies the preset neighborhood factor condition, the indication information for indicating reporting of the beam measurement information that satisfies the preset neighborhood subset index condition, and the indication information for indicating reporting of the beam measurement information from the plurality of dimensions may be used alone or in any combination, which is not limited herein. Specific application scenarios of the indication information will be respectively described in the following embodiments, which are not described in detail here.

In a feasible implementation, when the beam reporting indication information includes the indication information for indicating the number of pieces of beam measurement information to be reported, the indication information for indicating the number of pieces of beam measurement information to be reported includes at least one of:

indication information for indicating an absolute number of pieces of beam measurement information to be reported; or

indication information for indicating a proportion coefficient of the beam measurement information to be reported.

It can be understood that the absolute number is an actual number of pieces of beam measurement information to be reported, and the proportion coefficient is a ratio of the actual number of pieces of beam measurement information to be reported to the total number of all the beam measurement information, and both the absolute number and the proportion coefficient are indication information for indicating the number of pieces of beam measurement information to be reported. It should be noted that in actual application scenarios, the absolute number indicating the beam measurement information to be reported and/or the proportion coefficient indicating the beam measurement information to be reported can be changed in real time as required, i.e., can be dynamically adjusted, to adapt to more application scenarios.

At S120, a plurality of reference signal resources are measured to obtain a plurality of pieces of beam measurement information.

In this operation, because the user apparatus has obtained the plurality of test beams configured with the reference signal resources in S110, the plurality of reference signal resources can be measured to obtain a plurality of pieces of beam measurement information in S120, such that the required target measurement information can be selected from the plurality of pieces of beam measurement information according to the beam reporting indication information in a subsequent operation.

It should be noted that the user apparatus may measure the plurality of reference signal resources in various manners, which is not limited herein. For example, measurement is performed according to a preset measurement procedure. When it is detected that a plurality of reference signal resources have been received, the plurality of reference signal resources are measured based on the preset measurement procedure to obtain a plurality of pieces of beam measurement information. For another example, a sensing apparatus is set by operation personnel to sense a received reference signal resource. When the sensing apparatus gives a prompt indicating that a received reference signal resource is detected, it indicates that a test beam is received. Therefore, a plurality of reference signal resources of the plurality of test beams may be measured to obtain a plurality of pieces of beam measurement information.

It should be noted that the beam measurement information includes at least one of:

received signal of the reference signal resource;

RSRP;

Reference Signal Receiving Quality (RSRQ);

SNR;

SINR; or

CSI.

It should be noted that the beam measurement information described in the above embodiments is merely a specific example. In other words, those having ordinary skills in the art may set fewer or more contents of the beam measurement information in specific application scenarios. For example, in some embodiments below, the RSRP may be L1-RSRP, L1-SINR, etc., which is not limited herein.

At S130, target measurement information is selected from the plurality of pieces of beam measurement information according to the beam reporting indication information.

In this operation, because the plurality of pieces of beam measurement information have been obtained by measuring the plurality of reference signal resources in S120, the user apparatus may further make a selection from the plurality of pieces of beam measurement information according to the received beam reporting indication information to obtain required target measurement information in S130, and the target measurement information is sent to the base station in a subsequent operation, thus reducing beam reporting overheads.

In an embodiment of the present disclosure, operations after S130 are further described. After S130, the method may further include, but not limited to, a following operation S150.

At S150, index information of the reference signal resource configured for a target beam is sent to the transmitting apparatus.

It should be noted that the target beam is the test beam corresponding to the target measurement information.

In this operation, the index information of the reference signal resource configured for the test beam corresponding to the target measurement information is sent to the base station, such that the base station can receive both the index information and the target measurement information based on which beam prediction is performed. As such, the base station can determine a specific content of an optimal beam result with the assistance of the index information, thereby improving the beam prediction effect of the base station.

In an embodiment of the present disclosure, S130 is further described. When the beam reporting indication information includes the indication information for indicating the number of pieces of beam measurement information to be reported, S130 may include, but not limited to, a following operation S131. S131 includes at least one of the following implementations.

In an implementation, S131 includes: sorting the plurality of pieces of beam measurement information in a descending order of quality to obtain a first measurement information sequence, and starting from the first piece of beam measurement information and sequentially selecting a first preset number of pieces of beam measurement information from the first measurement information sequence as the target measurement information according to the indication information for indicating the number of pieces of beam measurement information to be reported.

In this operation, the first measurement information sequence can be obtained by sorting the plurality of pieces of beam measurement information in a descending or ascending order of quality, and whether each piece of beam measurement information is of high or low quality can be known from its position in the first measurement information sequence. As such, a first preset number of pieces of beam measurement information in the first measurement information sequence can be sequentially selected starting from the first beam measurement information as the target measurement information, where the selected pieces of target measurement information are a plurality of pieces of beam measurement information with relatively high quality. It can be understood that this part of the beam measurement information has a satisfactory effect of assisting the base station in performing beam prediction, and is sufficient to assist the base station in performing beam prediction, so there is no need to send other beam measurement information to the base station. Therefore, beam reporting overheads can be reduced while ensuring that the base station has stable and reliable beam prediction performance.

It should be noted that the first preset number may be indicated by the indication information for indicating the number of pieces of beam measurement information to be reported. A specific indication method of the indication information for indicating the number of pieces of beam measurement information to be reported may be set according to actual situations. For example, when the number of pieces of beam measurement information to be reported is directly indicated, the indication information for indicating the number of pieces of beam measurement information to be reported may indicate a specific numerical value as the first preset number, or may be a number of subsets (such as areas) in the beam measurement information to be reported, etc., which is not limited herein. For another example, when the number of pieces of beam measurement information to be reported is indirectly indicated, the indication information for indicating the number of pieces of beam measurement information to be reported may indicate an indirect parameter associated with the first preset number, for example, but not limited to, a reporting ratio parameter. Because the user apparatus can determine the number of the plurality of pieces of beam measurement information obtained through measurement, the number of pieces of beam measurement information to be reported can be obtained by calculating a product of the reporting ratio parameter and the number of the plurality of pieces of beam measurement information obtained through measurement.

In another implementation, S131 includes: grouping the plurality of pieces of beam measurement information into a first preset number of beam information groups according to the indication information for indicating the number of pieces of beam measurement information to be reported, and selecting the beam measurement information indicating highest quality in each of the beam information groups as the target measurement information.

In this operation, the plurality of pieces of beam measurement information are grouped into the first preset number of beam information groups, and therefore, the beam measurement information indicating the highest quality in each of the beam information groups can be respectively selected. In other words, one piece of beam measurement information indicating the highest quality is selected from each of the first preset number of beam information groups, and finally the first preset number of pieces of beam measurement information with high quality are selected as the target measurement information. It can be understood that this part of the beam measurement information has a satisfactory effect of assisting the base station in performing beam prediction, and is sufficient to assist the base station in performing beam prediction, so there is no need to send other beam measurement information to the base station. Therefore, beam reporting overheads can be reduced while ensuring that the base station has stable and reliable beam prediction performance.

In another implementation, S131 includes: sorting the plurality of pieces of beam measurement information in a descending order of quality according to a ratio of adjacent piece of beam measurement information to each of the plurality of pieces of beam measurement information to obtain a second measurement information sequence, and starting from the first piece of beam measurement information and sequentially selecting a first preset number of pieces of beam measurement information in the second measurement information sequence as the target measurement information according to the indication information for indicating the number of pieces of beam measurement information to be reported.

In this operation, the ratio of adjacent piece of beam measurement information to each of the plurality of pieces of beam measurement information may also be used to indirectly characterize whether the beam measurement information is of high or low quality. As such, a second measurement information sequence can be obtained by sorting the plurality of pieces of beam measurement information in a descending order of quality based on the ratio of adjacent piece of beam measurement information to each of the plurality of pieces of beam measurement information, and a first preset number of pieces of beam measurement information in the second measurement information sequence can be sequentially selected starting from the first beam measurement information as the target measurement information. The selected pieces of target measurement information are a plurality of pieces of beam measurement information with relatively high quality. It can be understood that this part of the beam measurement information has a satisfactory effect of assisting the base station in performing beam prediction, and is sufficient to assist the base station in performing beam prediction, so there is no need to send other beam measurement information to the base station. Therefore, beam reporting overheads can be reduced while ensuring that the base station has stable and reliable beam prediction performance.

It should be noted that the sorting method of the second measurement information sequence and the sorting method of the first measurement information sequence do not affect each other. In other words, the two may be the same or different, and are related only to the specific grouping reference, which is not limited herein. The same applies to new measurement information mentioned in the following embodiments.

In another feasible implementation, S131 includes: randomly selecting a first preset number of pieces of beam measurement information from the plurality of pieces of beam measurement information as the target measurement information according to the indication information for indicating the number of pieces of beam measurement information to be reported.

In this operation, the first preset number of pieces of beam measurement information are randomly selected from the plurality of pieces of beam measurement information as the target measurement information according to the indication information for indicating the number of pieces of beam measurement information to be reported. It can be understood that this part of the beam measurement information is sufficient to assist the base station in performing beam prediction, so there is no need to send other beam measurement information to the base station. Therefore, beam reporting overheads can be reduced while ensuring that the base station has stable and reliable beam prediction performance.

It should be noted that the first predetermined number of pieces of beam measurement information may be randomly selected in various manners, which is not limited herein. For example, each time one piece of beam measurement information is randomly selected from the plurality of pieces of beam measurement information, a subsequent piece of beam measurement information is randomly selected from the rest of the plurality of remaining pieces of beam measurement information in the same manner, until the first preset number of pieces of beam measurement information have been randomly selected. For another example, the first preset number of pieces of beam measurement information are randomly selected from the plurality of pieces of beam measurement information at one time.

In another implementation, S131 includes: selecting a first preset number of pieces of beam measurement information corresponding to preset reference signal resource indices from the plurality of pieces of beam measurement information as the target measurement information according to the indication information for indicating the number of pieces of beam measurement information to be reported.

In this operation, because the corresponding reference signal resource indices have been determined, a first preset number of pieces of beam measurement information corresponding to the preset reference signal resource indices can be selected from the plurality of pieces of beam measurement information as the target measurement information according to the indication information for indicating the number of pieces of beam measurement information to be reported. In other words, the beam measurement information corresponding to the reference signal resource indices as a target can be selected and reported as the target measurement information. It can be understood that this part of the beam measurement information is sufficient to assist the base station in performing beam prediction, so there is no need to send other beam measurement information to the base station. Therefore, beam reporting overheads can be reduced while ensuring that the base station has stable and reliable beam prediction performance.

It should be noted that the "preset reference signal resource indices" in the above embodiments may be a predefined reference signal resource index or a fixed reference signal resource index, which is not limited herein.

The above embodiments will be described below in conjunction with the accompanying drawings and specific examples.

Example Embodiment One:

Beam measurement information with a greater L 1-RSRP or L 1-SINR is more important for beam prediction of the base station, and beam directions with large changes in adjacent beam quality contain richer information, which is more conducive to model inference and beam prediction on the base station side. Therefore, this embodiment considers reporting the top transmitting beams having a greater L1-RSRP or L1-SINR or the top transmitting beams for which a L 1-RSRP or L1-SINR ratio between reference signals adjacent thereto is large, i.e., the user apparatus only needs to report beam measurement information having good beam quality or a large change in adjacent beam quality, so as to reduce reporting overheads.

In order to realize the beam adjustment of the downlink transmitting end, the base station first transmits $M$ number of configured reference signals by means of different transmitting beams and/or a proportion coefficient $\rho$ (0<$\rho$≤1) and/or a number $K$ of beams to be reported (1≤$K$≤$M$) to the user apparatus. The reference signal is intended for sending beam quality measurement content. The proportion coefficient $\rho$ is intended for dynamically adjusting the number of pieces of beam measurement information to be reported. $K$ is intended for indicating the number of pieces of beam measurement information to be reported by the user apparatus or an interval of beam measurement information. When the proportion coefficient $\rho$ and/or the number $K$ of beams to be reported are not configured or are default, it indicates that the user apparatus needs to report all the beam measurement information or fall back to a conventional reporting method.

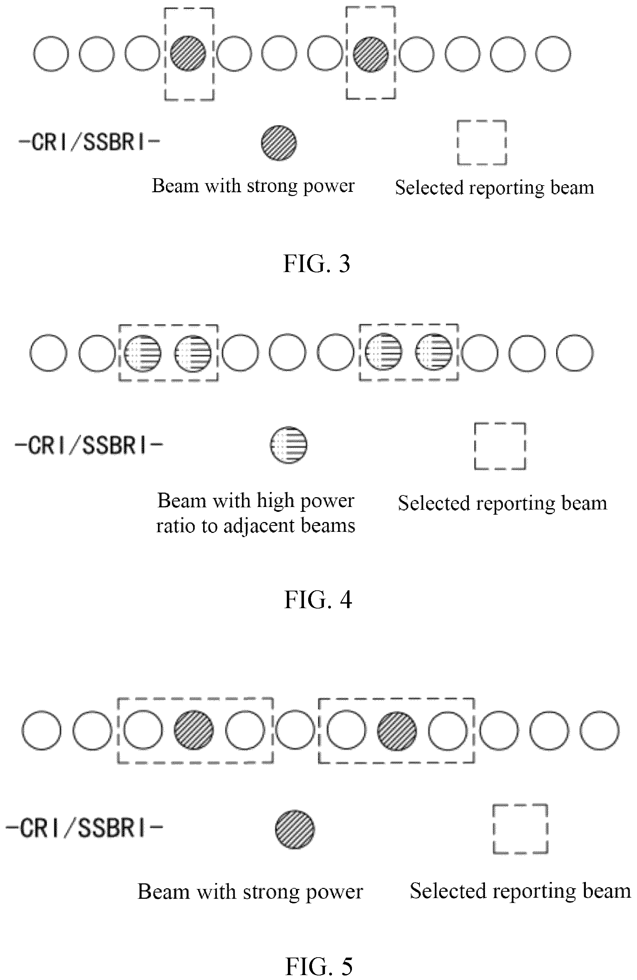

In some embodiments, as shown in FIG. 3, each "∘" in FIG. 3 represents one test beam, and the user apparatus reports only the top beams having good beam quality. The beam quality information in FIG. 3 is embodied as L1-RSRP, which is simply denoted as "power" briefly in FIG. 3. In this case, after measuring the $M$ number of reference signals transmitted by means of different transmitting beams, the user apparatus sorts the measured beam quality information, i.e., the L1-RSRP in a descending order, i.e., determines "Beam with strong power" shown in FIG. 3, and selects the top $N$ pieces of beam quality information having large numerical values. In an implementation, $N=\lceil \rho M \rceil$ or $\lfloor \rho M \rfloor$ or $K$, where "⌈ ⌉" and "⌊ ⌋" respectively represent a round-up sign and a round-down sign. Then, the user apparatus reports reference signal resource indices CRI/SSBRI and beam quality information corresponding to the $N$ number of beams to the base station.

In some embodiments, the user apparatus reports only the first beams having good beam quality. In this case, after measuring the $M$ number of reference signals transmitted by means of different transmitting beams, the user apparatus obtains $M$ pieces of beam quality information (L1-RSRP or L1-SINR). Then, the user apparatus sequentially groups the $M$ pieces of beam quality information into a plurality of beam groups, where the number of reference signals included in each beam group is defined as $K$. The user apparatus compares the beam quality of the beam quality information in each beam group, and reports the beam quality information indicates the highest quality in each beam group and the corresponding reference signal resource index CRI/SSBRI to the base station.

In some embodiments, the user apparatus randomly reports a plurality of beams. In this case, after measuring the $M$ number of reference signals transmitted by means of different transmitting beams, the user apparatus randomly selects $N$ pieces of beam quality information (e.g., L1-RSRP or L1-SINR). In an implementation,

$N=\lceil \rho M \rceil$ or $\lfloor \rho M \rfloor$ or $K$, where "⌈ ⌉" and "⌊ ⌋" respectively represent a round-up sign and a round-down sign. Then, the user apparatus reports reference signal resource indices, i.e., CRI/SSBRI and beam quality information corresponding to the N number of beams to the base station.

In some embodiments, the user apparatus reports a plurality of beams having fixed indices. In this case, after measuring the $M$ number of reference signals transmitted by means of different transmitting beams, the user apparatus selects $N$ pieces of beam quality information (e.g., L1-RSRP or L1-SINR) corresponding to predefined or fixed reference signal resource indices. In an implementation, $N=\lceil \rho M \rceil$ or $\lfloor \rho M \rfloor$ or $K$, and "⌊ ⌋" and "⌊ ⌋" respectively represent a round-up sign and a round-down sign. Then, the user apparatus reports reference signal resource indices, i.e., CRI/SSBRI and beam quality information corresponding to the N number of beams to the base station.

In some embodiments, as shown in FIG. 4, each "∘" in FIG. 4 represents one test beam, and the user apparatus reports only some beam pairs whose beam quality changes quickly. The beam quality information in FIG. 4 is embodied as L1-RSRP, which is simply denoted as "power" in FIG. 4 to avoid redundancy. In this case, after measuring the $M$ number of reference signals transmitted by means of different transmitting beams, the user apparatus calculates, for each reference signal, a ratio of beam quality information L1-RSRP of this reference signal to that of an adjacent reference signal, sorts the ratios in a descending order, i.e., determines "Beam with high power ratio to adjacent beam" shown in FIG. 4, and selects the top N pieces of beam quality information corresponding to greater ratios. In an implementation, $N=\lceil \rho M \rceil$ or $\lfloor \rho M \rfloor$ or $K$, where "⌈ ⌉" and "⌊ ⌋" respectively represent a round-up sign and a round-down sign. Then, the user apparatus reports reference signal resource indices CRI/SSBRI and beam quality information corresponding to the N number of beams to the base station.

Finally, the base station inputs the reference signal resource indices and/or the beam quality information reported by the user apparatus to an Artificial Intelligence (AI) model for AI-based beam prediction to derive an optimal transmitting-receiving beam pair. Alternatively, the base station performs data preprocessing such as interpolation, zero-fill, noise reduction, dimensionality augmentation, etc., on the beam measurement information reported by the user apparatus, so as to match the input of the AI model and improve the robustness of the network to noise; and then performs AI-based beam prediction to derive an optimal transmitting-receiving beam pair based on the preprocessed reference signal resource indices and/or beam quality information. Compared with a method of measuring and reporting all reference signals, the technical scheme of this embodiment can effectively reduce reporting overheads, and achieves a balance between reporting overheads and beam prediction performance by dynamically adjusting the proportion coefficient $\rho$ or the number $K$ of beams to be reported.

In an embodiment of the present disclosure, S130 is further described. When the beam reporting indication information includes the indication information for indicating the number of pieces of beam measurement information to be reported and the indication information for indicating reporting of the beam measurement information that satisfies the preset threshold condition, the indication information for indicating the number of pieces of beam measurement information to be reported includes indication information for indicating a minimum preset number of pieces of beam measurement information to be reported. S130 may include, but not limited to, a following operation S132. S132 includes at least one of the following feasible implementations.

In an implementation, S132 includes: selecting the beam measurement information with a quality greater than a first preset threshold from the plurality of pieces of beam measurement information as the target measurement information according to the indication information for indicating reporting of the beam measurement information that satisfies the preset quality threshold condition.

In this operation, the beam measurement information with a quality greater than the first preset threshold is selected from the plurality of pieces of beam measurement information according to the preset quality threshold condition. Because the first preset threshold is a set value above which a quality requirement is met, it can be determined that the beam measurement information with a quality greater than the first preset threshold meets the requirement, so this part of beam measurement information with a quality greater than the first preset threshold can be determined as the target measurement information. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

In another implementation, S132 includes: selecting the beam measurement information corresponding to a ratio of its value to the value of an adjacent beam measurement information that is greater than a second preset threshold, as the target measurement information according to the indication information for indicating reporting of the beam measurement information that satisfies the preset quality ratio threshold condition.

In this operation, the beam measurement information corresponding to a ratio greater than the second preset threshold is selected from the plurality of pieces of beam measurement information according to the preset quality ratio threshold condition. Because the second preset threshold is a set threshold for the ratio of two adjacent pieces of beam measurement information and can indirectly characterize whether the beam measurement information is of high or low quality, it can be determined that the beam measurement information corresponding to a ratio of its value to the value of an adjacent beam measurement information that is greater than the second preset threshold meets the requirement, so this part of beam measurement information corresponding to a ratio greater than the second preset threshold can be determined as the target measurement information. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

In another implementation, S132 includes: selecting the beam measurement information with a quality greater than a first preset threshold from the plurality of pieces of beam measurement information according to the indication information for indicating reporting of the beam measurement information that satisfies the preset quality threshold condition, and when determining according to the indication information for indicating a minimum preset number of pieces of beam measurement information to be reported that a number of the beam measurement information with a quality greater than the first preset threshold is less than the minimum preset number, sorting the plurality of pieces of beam measurement information in a descending order of quality to obtain a first measurement information sequence, and starting from the first piece of beam measurement information and sequentially selecting the minimum preset number of pieces of beam measurement information in the first measurement information sequence as the target measurement information.

In this operation, the beam measurement information with a quality greater than the first preset threshold is selected from the plurality of pieces of beam measurement information according to the preset quality threshold condition. Because the first preset threshold is a set value that meets a quality requirement, it can be determined that the beam measurement information with a quality greater than the first preset threshold meets the requirement. Then, it is determined whether the number of pieces of beam measurement information in this part of beam measurement information meets the requirement of the minimum preset number. If not, the plurality of pieces of beam measurement information are sorted based on quality, and the minimum preset number of pieces of beam measurement information are further selected as the target measurement information according to a result of the sorting. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

In another implementation, operation S132 includes: selecting the beam measurement information corresponding to a ratio of its value to the value of an adjacent beam measurement information that is greater than a second preset threshold according to the indication information for indicating reporting of the beam measurement information that satisfies the preset quality ratio threshold condition, and when determining according to the indication information for indicating a minimum preset number of pieces of beam measurement information to be reported that a number of the beam measurement information corresponding to a ratio of its value to the value of an adjacent beam measurement information that is greater than a second preset threshold is less than the minimum preset number, sorting the plurality of pieces of beam measurement information in a descending order of quality to obtain a first measurement information sequence, and starting from the first piece of beam measurement information and sequentially selecting the minimum preset number of pieces of beam measurement information in the first measurement information sequence, as the target measurement information.

In this operation, the beam measurement information corresponding to a ratio of its value to the value of an adjacent beam measurement information that is greater than the second preset threshold is selected from the plurality of pieces of beam measurement information according to the preset quality ratio threshold condition. Because the second preset threshold is a set threshold for the ratio of two adjacent pieces of beam measurement information and can indirectly characterize whether the beam measurement information is of high or low quality, it can be determined that the beam measurement information corresponding to a ratio of its value to the value of an adjacent beam measurement information that is greater than the second preset threshold meets the requirement. Then, it is determined whether the number of pieces of beam measurement information in this part of beam measurement information meets the requirement of the minimum preset number. If not, the plurality of pieces of beam measurement information are sorted based on quality, and the minimum preset number of pieces of beam measurement information are further selected as the target measurement information according to a result of the sorting. It can be understood that this part of the beam measurement information indicates relatively high quality and is sufficient to assist the base station in performing beam prediction, so there is no need to send other beam measurement information to the base station. Therefore, beam reporting overheads can be reduced while ensuring that the base station has stable and reliable beam prediction performance.

It should be noted that the first preset threshold and the second preset threshold may be indicated by the indication information for indicating reporting of the beam measurement information that satisfies the preset quality threshold condition according to specific situations, which is not limited herein.

The above embodiments will be described below by way of specific examples.

Example Embodiment Two:

Beam measurement information with a larger L1-RSRP or L1-SINR is important for beam prediction of the base station, and beam directions with large changes in adjacent beam quality contain richer information, which is more conducive to model inference and beam prediction on the base station side. Therefore, the technical scheme of this embodiment considers reporting the top transmitting beams having a larger L 1-RSRP or L 1-SINR or the top transmitting beams corresponding to a ratio of its value to the value of an adjacent beam measurement information that is large. In other words, the user apparatus only needs to report reference signal measurement results having good beam quality or a large change in adjacent beam quality, so as to reduce reporting overheads.

In order to realize the beam adjustment of the downlink transmitting end, the base station first transmits $M$ number of configured reference signals and/or an absolute threshold $\alpha$ and/or a proportional threshold $\beta$ and/or a minimum reporting number $W$ ($W \geq 1$). The reference signal is intended for providing a signal of a test beam. The absolute threshold $\alpha$ is intended for selecting the transmitting beams having good beam quality. The proportional threshold $\beta$ is intended for selecting the transmitting beam with rich beam information. $W$ defines a lower limit for the number of beams to be reported by the user apparatus. When the absolute threshold $\alpha$ and/or the proportional threshold $\beta$ and/or the minimum reporting number $W$ are not configured or are default, it indicates that the user apparatus needs to report all the beam measurement information or fall back to a conventional reporting method.

Then, after measuring the $M$ number of reference signals transmitted by means of different transmitting beams, the user apparatus obtains $M$ pieces of beam quality information (e.g., L1-RSRP or L1-SINR). The user apparatus selects a plurality of reference signals whose beam quality information is greater than the absolute threshold $\alpha$, and reports the corresponding reference signal resource indices, i.e., CRI/SSBRI, and beam quality information to the base station. Alternatively, the user apparatus calculates for each reference signal, a ratio of beam quality information of this reference signal and an adjacent reference signal, selects a plurality of reference signals corresponding to the ratio is greater than the proportional threshold $\beta$ and/or whose beam quality information is greater than the absolute threshold $\alpha$, and reports the corresponding reference signal resource indices, i.e., CRI/SSBRI, and beam quality information to the base station. If the number of reference signals whose beam quality information is greater than the absolute threshold $\alpha$ is less than $W$, or the number of reference signals corresponding to a ratio of its value of measurement information to the value of an adjacent beam measurement information is greater than the proportional threshold $\beta$ and/or the number of reference signals whose beam quality information is greater than the absolute threshold $\alpha$ is less than $W$, the user apparatus should sort the beam quality information of all the reference signals in a descending order, select the top $W$ pieces of beam quality information and the corresponding reference signal resource indices, i.e., CRI/SSBRI, and report them to the base station.

Finally, the base station inputs the reference signal resource indices and/or the beam quality information reported by the user apparatus to an AI model for AI-based beam prediction to infer an optimal transmitting-receiving beam pair. Alternatively, the base station performs data preprocessing such as interpolation, zero-fill, noise reduction, dimensionality augmentation, etc., on the beam measurement information reported by the user apparatus, so as to match the input of the AI model and improve the robustness of the network to noise; and then performs AI-based beam prediction to infer an optimal transmitting-receiving beam pair based on the preprocessed reference signal resource indices and/or beam quality information. Compared with a method of measuring and reporting all sent reference signals, the technical scheme of this embodiment can effectively reduce reporting overheads, and achieves a balance between reporting overheads and beam prediction performance by dynamically adjusting the absolute threshold $\alpha$ and/or the proportional threshold $\beta$.

In an embodiment of the present disclosure, S130 is further described. When the beam reporting indication information includes the indication information for indicating the number of pieces of beam measurement information to be reported and the indication information for indicating reporting of the beam measurement information that satisfies the preset neighborhood factor condition, S130 may include, but not limited to, a following operation S133. S133 includes at least one of the following implementations.

In an implementation, S133 includes: sorting the plurality of pieces of beam measurement information in a descending order of quality to obtain a first measurement information sequence, starting from the first piece of beam measurement information and sequentially selecting a first preset number of pieces of beam measurement information in the first measurement information sequence according to the indication information for indicating the number of pieces of beam measurement information to be reported, and selecting all the beam measurement information in a target neighborhood neighboring to the first preset number of pieces of beam measurement information as the target measurement information according to the indication information for indicating reporting of the beam measurement information that satisfies the preset neighborhood factor condition.

In this operation, first, a first preset number of pieces of beam measurement information having high quality are selected from the sorted plurality of pieces of beam measurement information according to the indication information for indicating the number of pieces of beam measurement information to be reported, and then all the beam measurement information in a target neighborhood neighboring to the first preset number of pieces of beam measurement information is selected as the target measurement information according to neighborhood characteristics of the test beams characterized by the preset neighborhood factor condition, i.e., other beam measurement information in the target neighborhood of the beam measurement information having high quality can be sent to the base station. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

In another feasible implementation, S133 includes: grouping the plurality of pieces of beam measurement information into a second preset number of measurement windows according to the indication information for indicating reporting of the beam measurement information that satisfies the preset neighborhood factor condition, sorting the plurality of measurement windows in a descending order of quality according to a sum of all the beam measurement information in each of the measurement windows to obtain a third measurement information sequence, and starting from the first piece of beam measurement information and sequentially selecting a first preset number of pieces of beam measurement information in the third measurement information sequence, as the target measurement information according to the indication information for indicating the number of pieces of beam measurement information to be reported.

In this operation, first, the plurality of pieces of beam measurement information are grouped into a second preset number of measurement windows according to the indication information for indicating the number of pieces of beam measurement information to be reported, and the measurement windows are sorted in a descending order of quality according to a sum of all the beam measurement information in each of the measurement windows. Because the value of the sum of the beam measurement information in each measurement window can characterize the overall quality of the beam measurement information in the measurement window, the measurement windows of different quality can be distinguished by means of the third measurement information sequence through the above operation. As such, a first preset number of pieces of beam measurement information in the third measurement information sequence can be sequentially selected starting from the first piece of beam measurement information as the target measurement information. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

It should be noted that similar to the first preset number, the second preset number may be indicated by the indication information for indicating the number of pieces of beam measurement information to be reported. A specific indication method of the indication information for indicating the number of pieces of beam measurement information to be reported may be set according to actual situations. Because the first preset number has been described in detail in the above embodiments, the details will not be repeated herein.

The above embodiments will be described below in conjunction with the accompanying drawings and specific examples.

Example Embodiment Three:

Considering that an optimal transmitting beam radiates energy along surrounding beam directions, the technical scheme of this embodiment is not to report a plurality of transmitting beams having a large L 1-RSRP or L1-SINR, but to report a plurality of beam regions having a large L1-RSRP or L1-SINR. In other words, the user apparatus only needs to report measurement results of a part of transmitting beams and their adjacent beams, so as to reduce reporting overheads.

In order to realize the beam adjustment of the downlink transmitting end, the base station first configures $M$ number of reference signals and/or a proportion coefficient $\rho$ ($0<\rho\leq1$) and/or a number $K$ of beam regions to be reported ($1\leq K\leq M$) and/or a neighborhood factor $\Omega$. The reference signal is intended for providing a signal of a test beam. The proportion coefficient $\rho$ is intended for adjusting the number of test beams to be reported. $K$ is intended for indicating the number of reference signal regions to be reported by the user apparatus. The neighborhood coefficient $\Omega$ is intended for indicating an adjacent beam range to be reported. When the proportion coefficient $\rho$ and/or the number $K$ of beam regions to be reported and/or the neighborhood coefficient $\Omega$ are not configured or are default, it indicates that the user apparatus needs to report all the beam measurement information or fall back to a conventional reporting method. Alternatively, when $\Omega$ is not configured or a default value of $\Omega$ is 0, it indicates that the user apparatus reports measurement results of the first beams having good beam quality. Alternatively, when $\Omega$ is not configured or a default value of $\Omega$ is 1, it indicates that the user apparatus reports measurement results of the first beams having good beam quality and their first-order adjacent beams. Alternatively, when $\Omega$ is configured to be greater than 1, it indicates that the user apparatus reports measurement results of the first beams having good beam quality and their multi-order adjacent beams.

In some embodiments, as shown in FIG. 5, each "$\bigcirc$" in FIG. 5 represents one test beam. The beam quality information in FIG. 5 is embodied as L1-RSRP, which is simply denoted as "power" in FIG. 5 to avoid redundancy. After measuring the M reference signals transmitted by means of different transmitting beams, the user apparatus sorts the measured beam quality information L1-RSRP in a descending order, i.e., determines "Beam with strong power" shown in FIG. 5, and selects the top $N$ pieces of beam quality information having larger numerical values. In an implementation, $N=\lceil \rho M \rceil$ or $\lfloor \rho M \rfloor$ or $K$, where "$\lceil \ \rceil$" and "$\lfloor \ \rfloor$" respectively represent a round-up sign and a round-down sign. The reference signal resource indices CRI/SSBRI corresponding to the $N$ number of beams are defined as $r_i$ ($1\leq i\leq N$), and the user apparatus reports all reference signal resource indices CRI/SSBRI in a range $[r_i-\Omega, r_i+\Omega]$ ($1\leq i\leq N$) and corresponding beam measurement information to the base station.

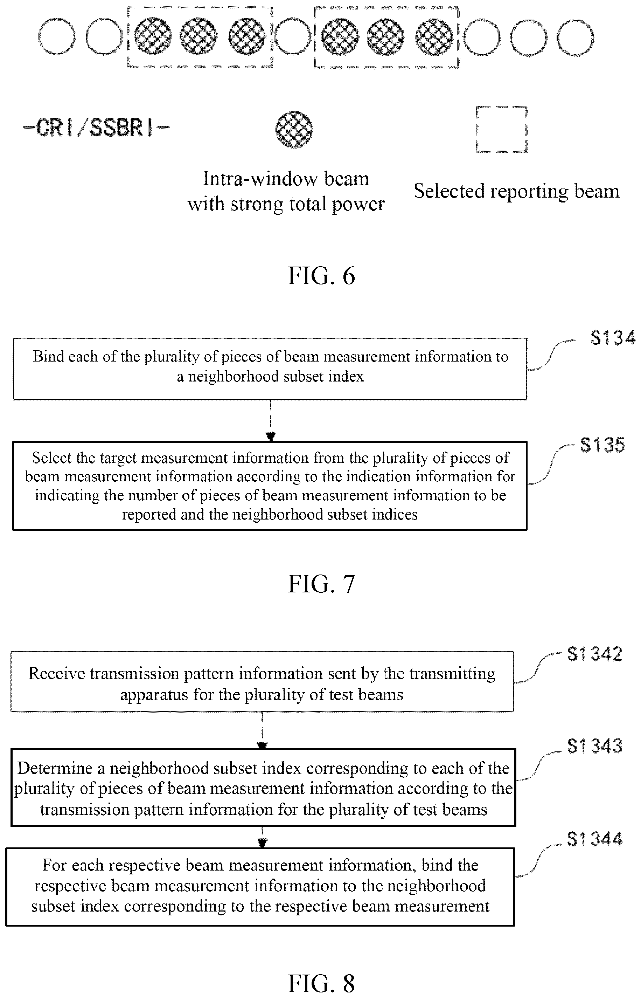

In some embodiments, as shown in FIG. 6, each "$\bigcirc$" in FIG. 6 represents one test beam. The beam quality information in FIG. 6 is embodied as L1-RSRP, which is simply denoted as "power" in FIG. 6 to avoid redundancy. After measuring the $M$ number of reference signals transmitted by means of different transmitting beams, the user apparatus obtains $M$ pieces of beam quality information L1-RSRP. Then, the user apparatus groups $\Omega$ number of reference signals into one measurement window, calculates a sum of beam quality information (e.g., L1-RSRP or L1-SINR) in each measurement window, sorts the measurement windows in a descending order, i.e., determines "Intra-window beam with strong total power" shown in FIG. 6, and selects the top $N$ number of measurement windows having larger values. In an implementation, $N=\lceil \rho M \rceil$ or $\lfloor \rho M \rfloor$ or $K$, where "$\lceil \ \rceil$" and "$\lfloor \ \rfloor$" respectively represent a round-up sign and a round-down sign. Finally, the user apparatus reports all reference signal resource indices CRI/SSBRI and corresponding beam measurement information in the N number of measurement windows to the base station.

Finally, the base station inputs the reference signal resource indices and/or the beam quality information reported by the user apparatus to an AI model for AI-based beam prediction to infer an optimal transmitting-receiving beam pair. Alternatively, the base station performs data preprocessing such as interpolation, zero-fill, noise reduction, dimensionality augmentation, etc. on the beam measurement information reported by the user apparatus, so as to match the input of the AI model and improve the robustness of the network to noise; and then performs AI-based beam prediction to infer an optimal transmitting-receiving beam pair based on the preprocessed reference signal resource indices and/or beam quality information. Compared with a method of measuring and reporting all sent reference signals, the technical scheme of this embodiment can effectively reduce reporting overheads, and achieves a balance between reporting overheads and beam prediction performance by dynamically adjusting the proportion coefficient $\rho$ or the number $K$ of beam regions to be reported or the neighborhood factor $\Omega$.

As shown in FIG. 7, in an embodiment of the present disclosure, S130 is further described. When the beam reporting indication information includes the indication information for indicating the number of pieces of beam measurement information to be reported, S130 may include, but is not limited to, the following operations S134 to S135.

At S134, each of the plurality of pieces of beam measurement information is bound to a neighborhood subset index.

At S135, the target measurement information is selected from the plurality of pieces of beam measurement information according to the indication information for indicating the number of pieces of beam measurement information to be reported and the neighborhood subset indices.

In this operation, considering that an optimal transmitting beam radiates energy toward neighboring beam directions, each of the plurality of pieces of beam measurement information is bound to a neighborhood subset index, i.e., beam measurement information in a neighborhood subset of each piece of beam measurement information is taken into account, and the target measurement information that meets the requirement is selected from the plurality of pieces of beam measurement information according to the neighborhood subset indices and the indication information for indicating the number of pieces of beam measurement information to be reported. It can be understood that the quality of the selected part of the beam measurement information is sufficient to assist the base station in performing beam prediction, so there is no need to send other beam measurement information to the base station. Therefore, beam reporting overheads can be reduced while ensuring that the base station has stable and reliable beam prediction performance.

In an embodiment of the present disclosure, S134 is further described. When the beam reporting indication information further includes the indication information for indicating reporting of the beam measurement information that satisfies the preset neighborhood subset index condition, S134 may include, but not limited to, a following operation S1341.

At S1341, for each of the plurality of pieces of beam measurement information, the respective beam measurement information is bound to a neighborhood subset index corresponding to the respective beam measurement information according to the indication information for indicating reporting of the beam measurement information that satisfies the preset neighborhood subset index condition.

In this operation, because the indication information for indicating reporting of the beam measurement information that satisfies the preset neighborhood subset index condition may be intended to indicate the neighborhood subset of each of the plurality of pieces of beam measurement information to the user apparatus, the beam measurement information may be bound to the neighborhood subset index corresponding to the beam measurement information according to the indication information, such that the target measurement information can be further selected based on the bound neighborhood subset index in a subsequent operation.

As shown in FIG. 8, in an embodiment of the present disclosure, S134 is further described. S134 may include, but not limited to, the following operations S1342 to S1344.

At S1342, transmission pattern information sent by the transmitting apparatus for the plurality of test beams is received.

At S1343, a neighborhood subset index corresponding to each of the plurality of pieces of beam measurement information is determined according to the transmission pattern information for the plurality of test beams.

At S1344, for each of the plurality of pieces of beam measurement information, the beam measurement information is bound to the neighborhood subset index corresponding to the respective beam measurement information.

In this operation, because parameter characteristics of the plurality of test beams can be ensured by the transmission pattern information for the plurality of test beams, the corresponding test beams can be determined according to the transmission pattern information for the plurality of test beams. Therefore, the neighborhood subset index corresponding to each of the plurality of pieces of beam measurement information is determined based on the transmission pattern information, and the respective beam measurement information is bound to the neighborhood subset index corresponding to the respective beam measurement information, such that the target measurement information can be further selected based on the bound neighborhood subset index in a subsequent operation.

In an embodiment of the present disclosure, S135 is further described. S135 may include, but not limited to, a following operation S1351. S1351 includes at least one of the following implementations.

In an implementation, S1351 includes: sorting the plurality of pieces of beam measurement information in a descending order of quality to obtain a first measurement information sequence, starting from the first piece of beam measurement information and sequentially selecting a first preset number of pieces of beam measurement information in the first measurement information sequence according to the indication information for indicating the number of pieces of beam measurement information to be reported, and determining the first preset number of pieces of beam measurement information and all the beam measurement information corresponding to the neighborhood subset indices bound to the first preset number of pieces of beam measurement information as the target measurement information.

In this operation, first, the plurality of pieces of beam measurement information are sorted in a descending order of quality to obtain a first measurement information sequence, such that a first preset number of pieces of beam measurement information having good quality can be selected from the first measurement information sequence. Then, considering the neighborhood subset indices of the selected beam measurement information, the first preset number of pieces of beam measurement information and all the beam measurement information corresponding to the neighborhood subset indices bound to the first preset number of pieces of beam measurement information are determined as the target measurement information. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

In another implementation, S1351 includes: sorting the neighborhood subset indices in a descending order of quality according to a sum of all the beam measurement information corresponding respective neighborhood subset indices to obtain a fourth measurement information sequence, starting from the first neighborhood subset index and sequentially selecting a first preset number of the neighborhood subset indices in the indices measurement information sequence, and determining all the beam measurement information corresponding to the first preset number of the neighborhood subset indices as the target measurement information.

In this operation, because the beam measurement information having the same neighborhood subset index can be regarded as the same type of beam measurement information, a further comparison may be performed based on the beam measurement information having the same neighborhood subset index. In other words, different neighborhood subset indices are sorted in a descending order of quality according to the sum of all the beam measurement information corresponding to each neighborhood subset index to obtain a fourth measurement sequence. Then, a first preset number of the neighborhood subset indices are selected from the fourth measurement information sequence, and all the beam measurement information corresponding to the first preset number of the neighborhood subset indices is determined as the target measurement information. It can be understood that this part of the beam measurement information is of relatively high quality and is sufficient to assist the base station in performing beam prediction, so there is no need to send other beam measurement information to the base station. Therefore, beam reporting overheads can be reduced while ensuring that the base station has stable and reliable beam prediction performance.

The above embodiments will be described below in conjunction with the accompanying drawings and specific examples.

Example Embodiment Four:

Considering that an optimal transmitting beam radiates energy toward surrounding beam directions, the technical scheme of this embodiment is not to report a plurality of transmitting beams having a large L1-RSRP or L1-SINR, but to report a plurality of beam regions having a large L1-RSRP or L1-SINR. In other words, the user apparatus only needs to report measurement results of a part of transmitting beams and their adjacent beams, so as to reduce reporting overheads.

In order to realize the beam adjustment of the downlink transmitting end, the base station first configures $M$ number of reference signals and/or a proportion coefficient $\rho$ ($0<\rho\leq1$) and/or a number $K$ of beam regions to be reported ($1\leq K\leq M$). The reference signal is intended for providing a signal of a test beam. The proportion coefficient $\rho$ is intended for adjusting the number of test beams to be reported. $K$ is intended for indicating the number of reference signal regions to be reported by the user apparatus. When the proportion coefficient $\rho$ and/or the number $K$ of beam regions to be reported are not configured or are default, it indicates that the user apparatus needs to report all the beam measurement information or fall back to a conventional reporting method. In addition, the $M$ number of reference signals are each bound to a neighborhood subset index $SubsetIndex$. Transmitting beam directions of all reference signals corresponding to the same neighborhood subset index are neighboring, including a first dimension and a second dimension. Alternatively, the base station indicates a transmitting beam pattern including beam directions and numbers in the first dimension and the second dimension to the user apparatus through signaling, and the user apparatus can autonomously estimate a neighborhood subset of each transmitting beam based on the transmitting beam pattern.

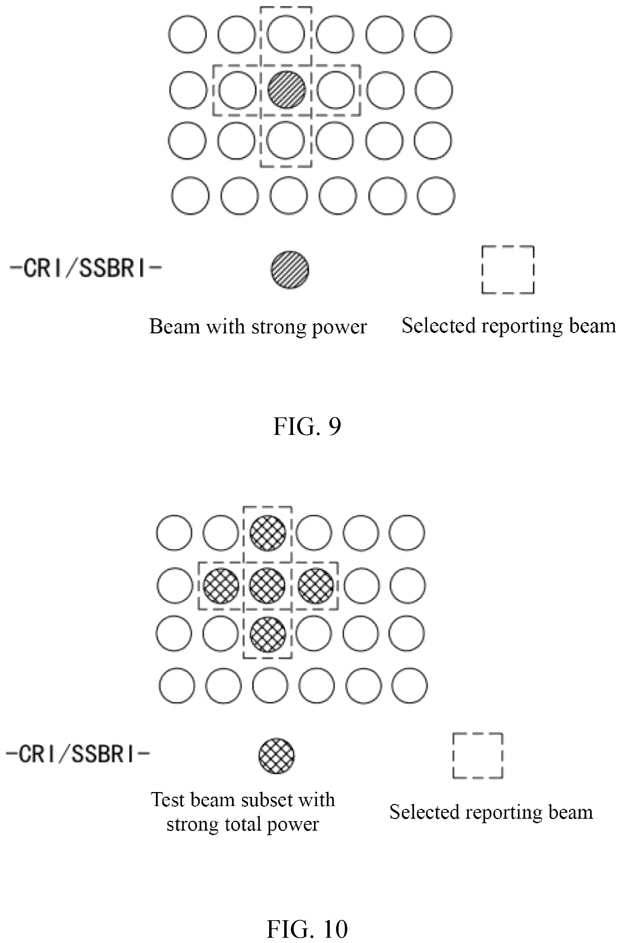

In some embodiments, as shown in FIG. 9, each "○" in FIG. 9 represents one test beam. The beam quality information in FIG. 9 is embodied as L1-RSRP, which is simply denoted as "power" in FIG. 9 to avoid redundancy. After measuring the $M$ number of reference signals transmitted by means of different transmitting beams, the user apparatus sorts the measured beam quality information L1-RSRP in a descending order by the value, i.e., the determined "Beam with strong power" shown in FIG. 9, and the selected top $N$ pieces of beam quality information having larger numerical values. In an implementation, $N=\lceil \rho M \rceil$ or $\lfloor \rho M \rfloor$ or $K$, where "⌈ ⌉" and "⌊ ⌋" respectively represent a round-up sign and a round-down sign. Then, the user apparatus reports the indices CRI/SSBRI and the beam quality information of the $N$ number of reference signals, and all the reference signal resource indices and the beam quality information in the subset to which the $N$ number of reference signals belong to the base station.

In some embodiments, as shown in FIG. 10, each "○" in FIG. 10 represents one test beam. The beam quality information in FIG. 10 is embodied as L1-RSRP, which is simply denoted as "power" in FIG. 10 to avoid redundancy. After measuring the $M$ number of reference signals transmitted by means of different transmitting beams, the user apparatus obtains $M$ pieces of beam quality information L1-RSRP. Then, the user apparatus calculates the sum of the beam quality information corresponding to each neighborhood subset index, sorts the neighborhood subset indices in a descending order, i.e., the determined "Test beam subset with strong total power" shown in FIG. 10, and selects the top $N$ neighborhood subsets having larger numerical values. In an implementation, $N=\lceil \rho M \rceil$ or $\lfloor \rho M \rfloor$ or $K$, where "⌈ ⌉" and "⌊ ⌋" respectively represent a round-up sign and a round-down sign. Finally, the user apparatus reports all reference signal resource indices CRI/SSBRI and corresponding beam measurement information in the N neighborhood subsets to the base station.

Finally, the base station inputs the reference signal resource indices and/or the beam quality information reported by the user apparatus to an AI model for AI-based beam prediction to infer an optimal transmitting-receiving beam pair. Alternatively, the base station performs data preprocessing such as interpolation, zero-fill, noise reduction, dimensionality augmentation, etc., on the beam measurement information reported by the user apparatus, so as to match the input of the AI model and improve the robustness of the network to noise; and then performs AI-based beam prediction to infer an optimal transmitting-receiving beam pair based on the preprocessed reference signal resource indices and/or beam quality information. Compared with a method of measuring and reporting all sent reference signals, the technical scheme of this embodiment can effectively reduce reporting overheads, and achieves a balance between reporting overheads and beam prediction performance by dynamically adjusting the proportion coefficient $\rho$ or the number $K$ of beam regions to be reported or the size of the neighborhood subset.

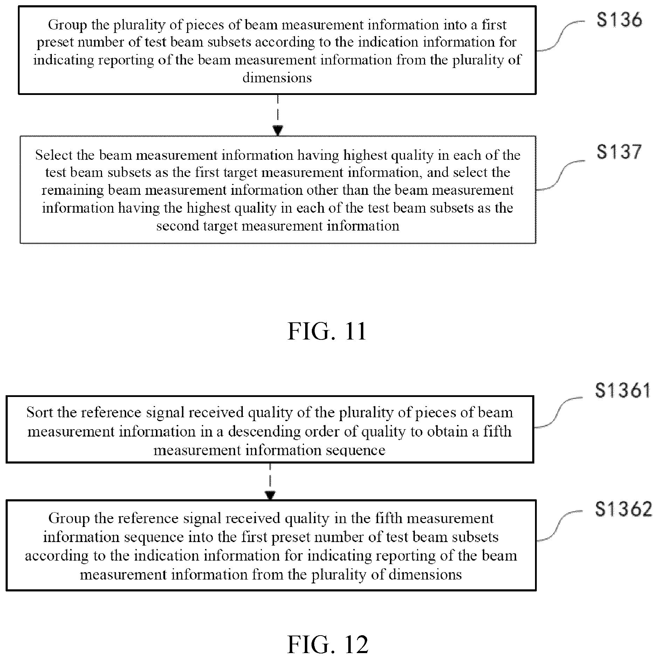

As shown in FIG. 11, in an embodiment of the present disclosure, S130 is further described. When the beam reporting indication information includes indication information for indicating reporting of the beam measurement information from a plurality of dimensions, the target measurement information includes first target measurement information to be sent to the base station in an absolute value reporting manner and second target measurement information to be sent to the base station in a differential reporting manner, and S 130 includes, but is not limited to, the following operations S136 to S137.

At S136, the plurality of pieces of beam measurement information are grouped into a first preset number of test beam subsets according to the indication information for indicating reporting of the beam measurement information from the plurality of dimensions.

At S137, the beam measurement information having highest quality in each of the test beam subsets is selected as the first target measurement information, and the remaining beam measurement information other than the beam measurement information having the highest quality in each of the test beam subsets is selected as the second target measurement information.

In this operation, the plurality of pieces of beam measurement information are grouped into different subsets according to the indication information for indicating reporting of the beam measurement information from the plurality of dimensions, the beam measurement information having highest quality in each subset is selected as the first target measurement information, and the remaining beam measurement information other than the beam measurement information having the highest quality in each subset is selected as the second target measurement information. Because the first target measurement information is sent to the base station in an absolute value reporting manner and the second target measurement information is sent to the base station in a differential reporting manner, this operation is equivalent to sending a plurality of pieces of beam measurement information to the base station from the plurality of dimensions, i.e., the number of pieces of reference beam measurement information is increased. Therefore, compared with a conventional technical scheme, beam reporting overheads can be reduced while ensuring the beam prediction performance of the base station side, and the accuracy of the reported beam measurement information can be improved by increasing the number of pieces of reference beam measurement information, thereby further improving the beam prediction effect of the base station.

It should be noted that more target measurement information may be selected from more dimensions, and the beam prediction effect of the base station can be further improved based on the more target measurement information. The basic principle thereof is similar to that of the above embodiment, so the details will not be repeated here.

As shown in FIG. 12, in an embodiment of the present disclosure, S136 is further described. When the beam measurement information includes reference signal received quality, S136 may include, but is not limited to, the following operations S1361 to S1362.

At S1361, the reference signal received quality of the plurality of pieces of beam measurement information is sorted in a descending order of quality to obtain a fifth measurement information sequence.

At S1362, the reference signal received quality in the fifth measurement information sequence is grouped into the first preset number of test beam subsets according to the indication information for indicating reporting of the beam measurement information from the plurality of dimensions.

In this operation, the reference signal received quality of the plurality of pieces of beam measurement information is sorted in a descending order of quality to obtain a fifth measurement information sequence, and the reference signal received quality is grouped into the first preset number of test beam subsets according to the quality. The obtained test beam subset may include a plurality of different reference signal received quality to reflect the difference. In this way, the target measurement information can be selected based on the test beam subsets in a subsequent operation.

In an embodiment of the present disclosure, S136 is further described, and S136 may include, but not limited to, a following operation S1363.

At S1363, when receiving beam information of the plurality of test beams is determined, the beam measurement information corresponding to the same receiving beam information of the plurality of test beams is grouped into the same test beam subset according to the receiving beam information of the plurality of test beams and the indication information for indicating reporting of the beam measurement information from the plurality of dimensions.

In this operation, because the receiving beam information of the plurality of test beams can be intended to characterize receiving beams used by the user apparatus to receive the reference signal resources, the beam measurement information corresponding to the same receiving beam may be grouped into the same test beam subset according to the receiving beam information of the plurality of test beams and the indication information for indicating reporting of the beam measurement information from the plurality of dimensions.

It should be noted that the manner in which the beam measurement information is grouped into the test beam subsets is not limited. For example, the beam measurement information is grouped into the test beam subsets based on an equal division manner, i.e., all the beam measurement information is divided into equal parts, which are then respectively grouped into the first preset number of test beam subsets. For another example, only one piece of beam measurement information is selected from all the beam measurement information for classification at a time, and this operation is repeatedly executed, until all the beam measurement information is classified to obtain a final test beam subset.

The above embodiments will be described below in conjunction with the accompanying drawings and specific examples.

Example Embodiment Five:

Compared with a conventional beam reporting mechanism, the number of beams that need to be reported in the beam prediction method executed by the base station is larger, and the value range of beam quality information (e.g., L1-RSRP or L1-SINR) is larger. Therefore, to reduce the reporting overheads and ensure the reporting precision, this embodiment considers setting a plurality of pieces of reference beam quality information, i.e., a plurality of reference RSRPs or reference SINRs. In this embodiment, taking RSRP reporting as an example, the selected plurality of reference RSRPs are sent in an absolute value, and RSRPs corresponding to other reference signals are sent in a differential reporting manner.

In order to realize the beam adjustment of the downlink transmitting end, the base station first configures $M$ number of reference signals and/or a reference RSRP factor $\gamma$. The reference signal is intended for providing a signal of a test beam. $\gamma$ is intended for indicating the number of reference RSRPs. When $\gamma$ is not configured or $\gamma$ is default, it indicates that the number of reference RSRPs is 1, or it indicates that the number of reference RSRPs is determined autonomously by the user apparatus, or the user apparatus falls back to a conventional reporting method. After measuring the $M$ number of reference signals transmitted by means of different transmitting beams, the user apparatus divides the measured beam quality information RSRP into $\gamma$ number of subsets. For example, the user apparatus sorts RSRPs of the $M$ number of reference signals in a descending order, and equally divides the RSRPs into $\gamma$ number of subsets. Alternatively, the user apparatus divides the RSRPs of the $M$ number of reference signals into $\gamma$ number of subsets according to differences in directions of the receiving beams.

For reporting of L1-RSRP, the highest RSRP in each subset serves as a reference RSRP, and reported in absolute value. For example, the highest RSRP in each subset is quantized into a 7-bit payload in a range of [-140, -44] dBm, with a step size of 1 dBm. In addition, the reporting precision may be improved by increasing the number of payloads or reducing the step size. The user apparatus needs to report the $\gamma$ number of reference RSRPs and corresponding reference signal resource indices CRI/SSBRI. Other RSRPs in each subset sent in the differential reporting manner use the highest RSRP in the subset as the reference RSRP. For example, a differential RSRP is quantized into a 4-bit payload in a range of [-30, 0] dBm, with a step size of 2 dBm. In addition, the reporting overheads may be reduced by reducing the number of payloads or increasing the step size. For reporting of the differential RSRP, the user apparatus not only needs to report the differential RSRP and the corresponding reference signal resource index CRI/SSBRI, but also needs to report the highest RSRP serving as the reference RSRP and/or the reference signal resource index CRI/SSBRI corresponding to the highest RSRP.

Finally, the base station inputs the reference signal resource indices and/or the beam quality information reported by the user apparatus to an AI model for AI-based beam prediction to infer an optimal transmitting-receiving beam pair. Alternatively, the base station performs data preprocessing such as interpolation, zero-fill, noise reduction, dimensionality augmentation, etc., on the beam measurement information reported by the user apparatus, so as to match the input of the AI model and improve the robustness of the network to noise; and then performs AI-based beam prediction to infer an optimal transmitting-receiving beam pair based on the preprocessed reference signal resource indices and/or beam quality information. Compared with selecting only the highest measured RSRP in the same subset as the reference RSRP, the number of reference RSRPs is increased in the technical scheme of this embodiment, thereby reducing the reporting overheads while ensuring the RSRP reporting accuracy and the beam prediction performance.

It should also be noted that any two or more of the above embodiments or examples may be used in combination. For example, the base station indicates, to the user apparatus through signaling, a reporting method to be used to report the CSI feedback quantity, and at the same time, the base station indicates, to the user apparatus through signaling, assistance information required by the user apparatus in the reporting method, including the number of beams to be reported and/or a proportion coefficient and/or a preset threshold, which is not limited herein.

At S140, the target measurement information is sent to the transmitting apparatus, such that the transmitting apparatus predicts an optimal beam result according to the target measurement information.

In this operation, the user apparatus obtains a plurality of pieces of beam measurement information by measuring reference signal resources configured for test beams from the base station, and may select target measurement information to be reported to the base station from the plurality of pieces of beam measurement information according to beam reporting indication information from the base station. In other words, the receiving apparatus does not need to send all the beam measurement information obtained through measurement to the base station, but instead, selects and sends part of the beam measurement information, such that the beam reporting overheads and uplink transmission burden can be reduced. Hence, the base station can perform beam prediction with the assistance of the reported part of the beam measurement information, and the beam prediction performance of the base station is not affected. As such, beam training overheads, measurement power consumption, and processing delay can be reduced. To sum up, beam reporting overheads on the user apparatus side can be reduced while ensuring the beam prediction performance on the base station side. Therefore, the present disclosure can fill in the technical gap in related methods.

It should be noted that the optimal beam result may be predicted in various manners, which is not limited herein. For example, prediction is performed based on an AI model that has been trained and embedded in the base station. Because the target measurement information can assist in AI-based beam prediction on the base station side, the robustness and generalization of the AI model can be enhanced. For another example, the received target measurement information is input by operation personnel into a trained beam prediction network in the base station, to obtain an optimal beam result output by the beam prediction network.

It should be noted that the optimal beam result includes at least one of:

at least one optimal beam pair; or

at least one beam pair adjacent to at least one optimal beam pair.

In other words, the optimal beam result may be, but is not limited to, one or more optimal beam pairs each including an optimal transmitting beam and an optimal receiving beam, which may be set according to actual application scenarios and is not limited herein.

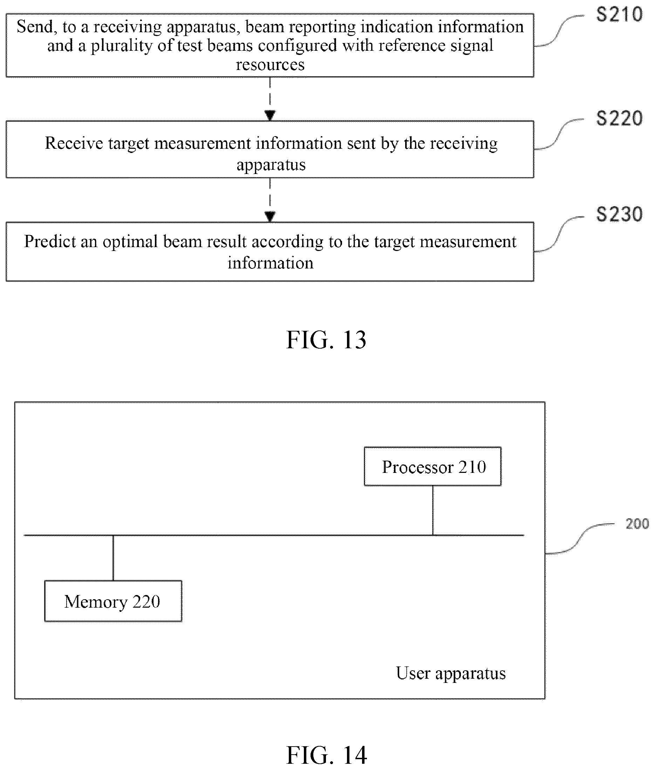

FIG. 13 is a flowchart of a method for beam management according to another embodiment of the present disclosure. The method is applied to a transmitting apparatus, such as the base station 120 in the embodiment shown in FIG. 1. The method may include, but is not limited to, the following operations S210 to S230.

At S210, beam reporting indication information and a plurality of test beams configured with reference signal resources are sent to a receiving apparatus.

It should be noted that the transmitting apparatus in this embodiment may be, but not limited to, the base station 120 in the embodiment shown in FIG. 1, and the receiving apparatus in this embodiment may be, but not limited to, the user apparatus 110 in the embodiment shown in FIG. 1; or those having ordinary skills in the art may set the corresponding transmitting apparatus or receiving apparatus according to actual application scenarios, which is not limited in this embodiment. To more conveniently describe the application scenarios and principles of the present disclosure, related embodiments are described below by means of a base station as the transmitting apparatus and a user apparatus as the receiving apparatus, but such embodiments should not be construed as a limitation to the embodiments of the present disclosure.

In this operation, beam reporting indication information and a plurality of test beams configured with reference signal resources are sent to the user apparatus, such that the user apparatus can obtain target measurement information based on the beam reporting indication information and the plurality of test beams configured with the reference signal resources. The target measurement information is provided to the base station for beam prediction.

It should be noted that the transmitting apparatus may have a plurality of beam transmitting directions, which are determined based on a preset operation logic or based on the control of operation personnel. When the transmitting apparatus has determined all the beam transmitting directions, the transmitting apparatus may obtain a plurality of test beams through configuration on at least part of the beam transmitting directions, i.e., on some or all of the beam transmission directions.

It should be noted that the plurality of test beams may be different from each other to simulate sweeping of different beams, and the specific number of test beams may be set according to actual application scenarios and is not limited herein.

It should be noted that the reference signal resource includes at least one of:

a CSI-RS resource; or

an SSB resource.

In other words, the configured reference signal resources may be CSI-RS resources and/or SSB resources, and the resources are configured to realize beam measurement and sweeping on the user apparatus side. The CSI-RS resources and SSB resources are well known to those having ordinary skills in the art and have been described in the foregoing embodiments, so the details will not be described herein.

At S220, target measurement information sent by the receiving apparatus is received.

It should be noted that the target measurement information is selected from a plurality of pieces of beam measurement information by the receiving apparatus according to the beam reporting indication information, and the beam measurement information is obtained by the receiving apparatus by measuring a plurality of reference signal resources.

In this operation, because beam reporting indication information and a plurality of test beams configured with reference signal resources has been sent to the user apparatus in S210, the user apparatus can obtain target measurement information based on the beam reporting indication information and the plurality of test beams configured with the reference signal resources, such that beam prediction can be performed based on the target measurement information in a subsequent operation.

It should be noted that the beam reporting indication information includes at least one of:

indication information for indicating a number of pieces of beam measurement information to be reported;

indication information for indicating reporting of the beam measurement information that satisfies a preset threshold condition, where the preset threshold condition includes a preset quality threshold condition or a preset quality ratio threshold condition;

indication information for indicating reporting of the beam measurement information that satisfies a preset neighborhood factor condition;

indication information for indicating reporting of the beam measurement information that satisfies a preset neighborhood subset index condition; or

indication information for indicating reporting of the beam measurement information from a plurality of dimensions.

The indication information for indicating the number of pieces of beam measurement information to be reported, the indication information for indicating reporting of the beam measurement information that satisfies the preset threshold condition, the indication information for indicating reporting of the beam measurement information that satisfies the preset neighborhood factor condition, the indication information for indicating reporting of the beam measurement information that satisfies the preset neighborhood subset index condition, and the indication information for indicating reporting of the beam measurement information from the plurality of dimensions may be used alone or in any combination, which is not limited herein. Specific application scenarios of the indication information will be respectively described in the following embodiments and are not described in detail here.

In an implementation, when the beam reporting indication information includes the indication information for indicating the number of pieces of beam measurement information to be reported, the indication information for indicating the number of pieces of beam measurement information to be reported includes at least one of:

indication information for indicating an absolute number of pieces of beam measurement information to be reported; or

indication information for indicating a proportion coefficient of the beam measurement information to be reported.

It can be understood that the absolute number is an actual number of pieces of beam measurement information to be reported, and the proportion coefficient is a ratio of the actual number of pieces of beam measurement information to be reported to the total number of all the beam measurement information, and both the absolute number and the proportion coefficient are indication information for indicating the number of pieces of beam measurement information to be reported. It should be noted that in actual application scenarios, the absolute number indicating the beam measurement information to be reported and/or the proportion coefficient indicating the beam measurement information to be reported can be changed in real time as required, i.e., can be dynamically adjusted, to adapt to more application scenarios.

It should be noted that the beam measurement information includes at least one of:

received signal of the reference signal resource;

RSRP;

reference signal received quality;

SNR;

SINR; or

CSI.

It should be noted that the beam measurement information described in the above embodiments is merely a specific example. In other words, those having ordinary skills in the art may set fewer or more contents of the beam measurement information in specific application scenarios, which is not limited herein.

At S230, an optimal beam result is predicted according to the target measurement information.

In this operation, the user apparatus obtains a plurality of pieces of beam measurement information by measuring reference signal resources configured for test beams from the base station, and may select target measurement information to be reported to the base station from the plurality of pieces of beam measurement information according to beam reporting indication information from the base station. In other words, the receiving apparatus does not need to send all the beam measurement information obtained through measurement to the base station, but instead, selects and sends part of the beam measurement information, such that the beam reporting overheads and uplink transmission burden can be reduced. In addition, the base station can perform beam prediction with the assistance of the reported part of the beam measurement information, and the beam prediction performance of the base station is not affected. As such, beam training overheads, measurement power consumption, and processing delay can be reduced. To sum up, beam reporting overheads on the user apparatus side can be reduced while ensuring the beam prediction performance on the base station side. Therefore, the present disclosure can fill in the technical gap in related methods.

It should be noted that the optimal beam result may be predicted in various manners, which is not limited herein. For example, prediction is performed based on an AI model that has been trained and embedded in the base station. Because the target measurement information can assist in AI-based beam prediction on the base station side, the robustness and generalization of the AI model can be enhanced. For another example, the received target measurement information is input by operation personnel into a trained beam prediction network in the base station, to obtain an optimal beam result output by the beam prediction network.

It should be noted that the optimal beam result includes at least one of:

at least one optimal beam pair; or

at least one beam pair adjacent to at least one optimal beam pair.

In other words, the optimal beam result may be, but not limited to, one or more optimal beam pairs each including an optimal transmitting beam and an optimal receiving beam, which may be set according to actual application scenarios and is not limited herein.

In an embodiment of the present disclosure, before S230, the method may further include, but not limited to, a following operation S240.

At S240, index information of the reference signal resource configured for a target beam is received from the receiving apparatus.

It should be noted that the target beam is the test beam corresponding to the target measurement information.

In this operation, the index information of the reference signal resource configured for the test beam corresponding to the target measurement information is received, such that both the index information and the target measurement information can be received, and beam prediction can be performed. As such, the base station can determine a specific content of an optimal beam result with the assistance of the index information, thereby improving the beam prediction effect.

In an embodiment of the present disclosure, S230 is further described, and S230 may include, but not limited to, a following operation S231.

At S231, the optimal beam result is predicted according to the target measurement information and the index information of the reference signal resource configured for the target beam.

In this operation, beam prediction can be performed based on the combination of the target measurement information and the index information of the reference signal resource configured for the target beam to obtain an optimal beam result, thereby improving the actual effect of beam prediction and the accuracy of beam prediction.

In addition, as shown in FIG. 14, an embodiment of the present disclosure discloses a user apparatus 200, including: at least one processor 210; and at least one memory 220, configured for storing at least one program.

The at least one program, when executed by the at least one processor 210, causes the at least one processor 210 to implement the method for beam management according to any one of the above embodiments, for example, implement the operations S110 to S140, S150, S131, S132, and S133 in FIG. 2, or the operations S134 to S135, and S1341 in FIG. 7, or the operations S1342 to S1344, and S1351 in FIG. 8, the operations S136 to S137 in FIG. 11, or the operations S1361 to S1362, or S1363 in FIG. 12.

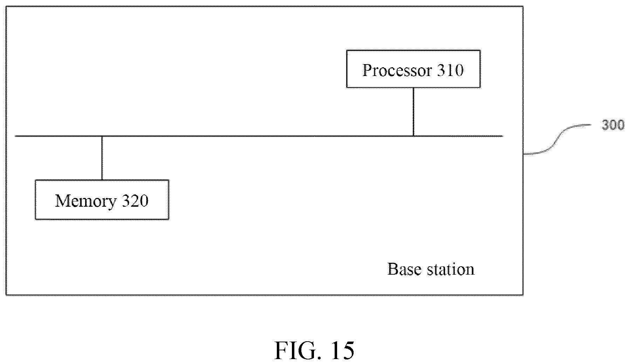

In addition, as shown in FIG. 15, an embodiment of the present disclosure discloses a base station 300, including: at least one processor 310; and at least one memory 320, configured for storing at least one program. The at least one program, when executed by the at least one processor 310, causes the at least one processor 310 to implement the method for beam management according to any one of the above embodiments, for example, the operations S210 to S230, S240, or S231 in FIG. 13.

In addition, an embodiment of the present disclosure discloses a computer-readable storage medium, storing a computer-executable instruction which, when executed by a processor, causes the processor to implement the method for beam management according to any one of the above embodiments.

In addition, an embodiment of the present disclosure discloses a computer program product, including a computer program or a computer instruction stored in a computer-readable storage medium which, when read from the computer-readable storage medium and executed by a processor of a computer device, causes the computer device to implement the method for beam management according to any one of the above embodiments.

Those having ordinary skills in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable, and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the implementations described above. Those having ordinary skills in the art can make various equivalent modifications or substitutions without departing from the essence of the present disclosure. Such equivalent modifications or substitutions fall within the scope defined by the claims of the present disclosure.

**Claims**

1. A method for beam management, applied to a receiving apparatus, the beam management method comprising:

   receiving beam reporting indication information sent by a transmitting apparatus and a plurality of test beams configured with reference signal resources;
   measuring a plurality of reference signal resources to obtain a plurality of pieces of beam measurement information;
   selecting target measurement information from the plurality of pieces of beam measurement information according to the beam reporting indication information; and
   sending the target measurement information to the transmitting apparatus, such that the transmitting apparatus predicts an optimal beam result according to the target measurement information.

2. The method of claim **1,** wherein the reference signal resource comprises at least one of:

   a Channel State Information Reference Signal (CSI-RS) resource; or
   a Synchronization Signal and Physical Broadcast Channel (PBCH) Block (SSB) resource.

3. The method of claim 1, wherein the beam reporting indication information comprises at least one of:

   indication information for indicating a number of pieces of beam measurement information to be reported;

indication information for indicating reporting of beam measurement information that satisfies a preset threshold condition, wherein the preset threshold condition comprises a preset quality threshold condition or a preset quality ratio threshold condition;

indication information for indicating reporting of beam measurement information that satisfies a preset neighborhood factor condition;

indication information for indicating reporting of beam measurement information that satisfies a preset neighborhood subset index condition; or

indication information for indicating reporting of beam measurement information from a plurality of dimensions.

4. The method of claim 3, wherein in response to the beam reporting indication information comprising the indication information for indicating the number of pieces of beam measurement information to be reported, the indication information for indicating the number of pieces of beam measurement information to be reported comprises at least one of:

indication information for indicating an absolute number of pieces of beam measurement information to be reported; or

indication information for indicating a proportion coefficient of the beam measurement information to be reported.

5. The method of claim 1, wherein the beam measurement information comprises at least one of:

received signal of the reference signal resource;
Reference Signal Receiving Power (RSRP);
Reference Signal Receiving Quality (RSRQ);
Signal-to-Noise Ratio (SNR);
Signal to Interference plus Noise Ratio (SINR); or
Channel State Information (CSI).

6. The method of claim 4, wherein in response to the beam reporting indication information comprising the indication information for indicating the number of pieces of beam measurement information to be reported, selecting the target measurement information from the plurality of pieces of beam measurement information according to the beam reporting indication information comprises at least one of:

sorting the plurality of pieces of beam measurement information by quality in a descending order to obtain a first measurement information sequence, and starting from first one of the sorted beam measurement information, sequentially selecting a first preset number of pieces of beam measurement information from the first measurement information sequence , as the target measurement information, according to the indication information for indicating the number of pieces of beam measurement information to be reported;

grouping the plurality of pieces of beam measurement information into a first preset number of beam information groups according to the indication information for indicating the number of pieces of beam measurement information to be reported, and performing a selection of the beam measurement information having highest quality in each of the beam information groups as the target measurement information;

calculating, for each of the plurality of pieces of beam measurement information, a ratio of a value of the respective beam measurement information to the value of another beam measurement information adjacent to the respective beam measurement information; and sorting the plurality of pieces of beam measurement information by quality in a descending order, according to the ratio corresponding to each of the pieces of beam measurement information to obtain a second measurement information sequence, and starting from first one of the sorted beam measurement information, sequentially selecting a first preset number of pieces of beam measurement information from the second measurement information sequence, as the target measurement information according to the indication information for indicating the number of pieces of beam measurement information to be reported;

randomly selecting a first preset number of pieces of beam measurement information from the plurality of pieces of beam measurement information as the target measurement information according to the indication information for indicating the number of pieces of beam measurement information to be reported; or

selecting a first preset number of pieces of beam measurement information corresponding to preset reference signal resource index from the plurality of pieces of beam measurement information as the target measurement information according to the indication information for indicating the number of pieces of beam measurement information to be reported.

7. The method of claim 3, wherein in response to the beam reporting indication information comprising both the indication information for indicating the number of pieces of beam measurement information to be reported and the indication information for indicating reporting of the beam measurement information that satisfies the preset threshold condition, the indication information for indicating the number of pieces of beam measurement information to be reported comprises indication information for indicating a minimum preset number of pieces of beam measurement information to be reported; and selecting target measurement information from the plurality of pieces of beam measurement information according to the beam reporting indication information comprises at least one of:

selecting the beam measurement information having a quality greater than a first preset threshold from the plurality of pieces of beam measurement information as the target measurement information according to the indication information for indicating reporting of the beam measurement information that satisfies the preset quality threshold condition;

calculating, for each of the plurality of pieces of beam measurement information, a ratio of a value of the respective beam measurement information to the value of another beam measurement information adjacent to the respective beam measurement information; and selecting the beam measurement information corresponding to the ratio that is greater than a second preset threshold as the target measurement information according to the indication information for indicating reporting of the beam measurement information that satisfies the preset quality ratio threshold condition;

selecting the beam measurement information having a quality greater than a first preset threshold from the plurality of pieces of beam measurement information according to the indication information for indicating reporting of the beam measurement information that satisfies the preset quality threshold condition, and in response to determining according to the indication information for indicating the minimum preset number of pieces of beam measurement information to be reported that a number of the beam measurement information having a quality greater than the first preset threshold is less than the minimum preset number, sorting the plurality of pieces of beam measurement information by quality in a descending order to obtain a first measurement information sequence, and starting from first one of the sorted beam measurement information, and sequentially selecting the minimum preset number of pieces of beam measurement information from the first measurement information sequence , as the target measurement information; or

calculating, for each of the plurality of pieces of beam measurement information, a ratio of a value of the respective beam measurement information to the value of another beam measurement information adjacent to the respective beam measurement information; and selecting the beam measurement information corresponding to the ratio that is greater than a second preset threshold according to the indication information for indicating reporting of the beam measurement information that satisfies the preset quality ratio threshold condition, and in response to determining according to the indication information for indicating the minimum preset number of pieces of beam measurement information to be reported that the number of the beam measurement information corresponding to the ratio that is greater than a second preset threshold is less than the minimum preset number, sorting the plurality of pieces of beam measurement information by quality in a descending order to obtain a first measurement information sequence, and starting from the first one of the sorted beam measurement information, and sequentially selecting the minimum preset number of pieces of beam measurement information from the first measurement information sequence, as the target measurement information.

8. The method of claim 4, wherein in response to the beam reporting indication information comprising both the indication information for indicating the number of pieces of beam measurement information to be reported and the indication information for indicating reporting of the beam measurement information that satisfies the preset neighborhood factor condition, selecting target measurement information from the plurality of pieces of beam measurement information according to the beam reporting indication information comprises at least one of:

sorting the plurality of pieces of beam measurement information by quality in a descending order to obtain a first measurement information sequence, starting from first one of the sorted beam measurement information and sequentially selecting a first preset number of pieces of beam measurement information from the first measurement information sequence according to the indication information for indicating the number of pieces of beam measurement information to be reported, and selecting all the beam measurement information in a target neighborhood neighboring to the first preset number of pieces of beam measurement information as the target measurement information according to the indication information for indicating reporting of the beam measurement information that satisfies the preset neighborhood factor condition; or

grouping the plurality of pieces of beam measurement information into a second preset number of measurement windows according to the indication information for indicating reporting of the beam measurement information that satisfies the preset neighborhood factor condition, sorting the plurality of measurement windows by quality in a descending order according to a sum of all the beam measurement information in each of the measurement windows to obtain a third measurement information sequence, and starting from first one of the sorted beam measurement information and sequentially selecting a first preset number of pieces of beam measurement information from the third measurement information sequence, as the target measurement information according to the indication information for indicating the number of pieces of beam measurement information to be reported.

9. The method of claim 4, wherein in response to the beam reporting indication information comprising the indication information for indicating the number of pieces of beam measurement information to be reported, selecting target measurement information from the plurality of pieces of beam measurement information according to the beam reporting indication information comprises:

binding the plurality of pieces of beam measurement information to a neighborhood subset index; and
selecting the target measurement information from the plurality of pieces of beam measurement information according to the indication information for indicating the number of pieces of beam measurement information to be reported and the neighborhood subset index.

10. The beam management method of claim 9, wherein in response to the beam reporting indication information further comprising the indication information for indicating reporting of the beam measurement information that satisfies the preset neighborhood subset index condition, binding the plurality of pieces of beam measurement information to a neighborhood subset index comprises:
for each beam measurement information, binding the respective beam measurement information to a neighborhood subset index corresponding to the respective beam measurement information according to the indication information for indicating reporting of the beam measurement information that satisfies the preset neighborhood subset index condition.

11. The method of claim 9, wherein binding the plurality of pieces of beam measurement information to a neighborhood subset index comprises:

receiving transmission pattern information sent by the transmitting apparatus for the plurality of test beams;
determining a neighborhood subset index corresponding to each of the plurality of pieces of beam measurement information according to the transmission pattern information for the plurality of test beams; and
for each of the plurality of pieces of beam measurement information, binding the respective beam measurement information to the neighborhood subset index corresponding to the respective beam measurement information.

12. The method of claim 9, wherein selecting the target measurement information from the plurality of pieces of beam measurement information according to the indication information for indicating the number of pieces of beam measurement information to be reported and the neighborhood subset index comprises at least one of:

sorting the plurality of pieces of beam measurement information by quality in a descending order to obtain a first measurement information sequence, starting from first one of the sorted beam measurement information and sequentially selecting a first preset number of pieces of beam measurement information from the first measurement information sequence according to the indication information for indicating the number of pieces of beam measurement information to be reported, and determining the first preset number of pieces of beam measurement information and each beam measurement information corresponding to the neighborhood subset index bound to the first preset number of pieces of beam measurement information as the target measurement information; or
sorting the neighborhood subset indices in a descending order by quality according to a sum of all the beam measurement information corresponding to the respective neighborhood subset indices to obtain a fourth measurement information sequence, starting from first one of the sorted neighborhood subset indices and sequentially selecting a first preset number of the neighborhood subset indices from the fourth measurement information sequence, and determining each beam measurement information corresponding to the first preset number of the neighborhood subset indices as the target measurement information.

13. The method of claim 1, wherein in response to the beam reporting indication information comprising indication information for indicating reporting of the beam measurement information from a plurality of dimensions, the target measurement information comprises first target measurement information to be sent to the transmitting apparatus in an absolute value reporting manner and second target measurement information to be sent to the transmitting apparatus in a differential reporting manner, and selecting target measurement information from the plurality of pieces of beam measurement information according to the beam reporting indication information comprises:

> grouping the plurality of pieces of beam measurement information into a first preset number of test beam subsets according to the indication information for indicating reporting of the beam measurement information from the plurality of dimensions; and
> selecting the beam measurement information having highest quality in each of the test beam subsets as the first target measurement information, and selecting the remaining beam measurement information other than the beam measurement information having the highest quality in each of the test beam subsets as the second target measurement information.

14. The method of claim 13, wherein in response to the beam measurement information comprising qualities of reference signals, grouping the plurality of pieces of beam measurement information into the first preset number of test beam subsets according to the indication information for indicating reporting of the beam measurement information from the plurality of dimensions comprises:

> sorting the plurality of pieces of beam measurement information by quality in a descending order to obtain a fifth measurement information sequence; and
> grouping the qualities of reference signals in the fifth measurement information sequence into the first preset number of test beam subsets according to the indication information for indicating reporting of the beam measurement information from the plurality of dimensions.

15. The method of claim 13, wherein grouping the plurality of pieces of beam measurement information into the first preset number of test beam subsets according to the indication information for indicating reporting of the beam measurement information from the plurality of dimensions comprises:
in response to determining receiving beam information of the plurality of test beams, grouping the beam measurement information corresponding to same receiving beam information of the plurality of test beams into same test beam subset according to the receiving beam information of the plurality of test beams and the indication information for indicating reporting of the beam measurement information from the plurality of dimensions.

16. The method of claim 1, wherein after selecting the target measurement information from the plurality of pieces of beam measurement information according to the beam reporting indication information, the method further comprises:
sending, to the transmitting apparatus, index information of the reference signal resource configured for a target beam, wherein the target beam is the test beam corresponding to the target measurement information.

17. A method for beam management, applied to a transmitting apparatus, the beam management method comprising:

> sending, to a receiving apparatus, beam reporting indication information and a plurality of test beams configured with a plurality of reference signal resources;
> receiving target measurement information sent by the receiving apparatus, wherein the target measurement information is selected by the receiving apparatus from a plurality of pieces of beam measurement information according to the beam reporting indication information, and the beam measurement information is obtained by the receiving apparatus by measuring the plurality of reference signal resources; and
> predicting an optimal beam result according to the target measurement information.

18. The method of claim 17, wherein the reference signal resource comprises at least one of:

> a Channel State Information Reference Signal (CSI-RS) resource; or
> a Synchronization Signal and Physical Broadcast Channel (PBCH) Block (SSB) resource.

19. The method of claim 17, wherein the beam reporting indication information comprises at least one of:

> indication information for indicating a number of pieces of beam measurement information to be reported;
> indication information for indicating reporting of beam measurement information that satisfies a preset threshold condition;
> indication information for indicating reporting of beam measurement information that satisfies a preset neighborhood factor condition;

indication information for indicating reporting of beam measurement information that satisfies a preset neighborhood subset index condition; or indication information for indicating reporting of the beam measurement information from a plurality of dimensions.

20. The method of claim 19, wherein in response to the beam reporting indication information comprising the indication information for indicating the number of pieces of beam measurement information to be reported, the indication information for indicating the number of pieces of beam measurement information to be reported comprises at least one of:

indication information for indicating an absolute number of pieces of beam measurement information to be reported; or indication information for indicating a proportion coefficient of the beam measurement information to be reported.

21. The method of claim 17, wherein the beam measurement information comprises at least one of:

received signal of the reference signal resource; Reference Signal Receiving Power (RSRP); Reference Signal Receiving Quality (RSRQ); Signal-to-Noise Ratio (SNR); Signal to Interference plus Noise Ratio (SINR); or Channel State Information (CSI).

22. The method of claim 17, wherein before predicting an optimal beam result according to the target measurement information, the method further comprises: receiving, from the receiving apparatus, index information of the reference signal resource configured for a target beam, wherein the target beam is the test beam corresponding to the target measurement information.

23. The method of claim 22, wherein predicting the optimal beam result according to the target measurement information comprises: predicting the optimal beam result according to the target measurement information and the index information of the reference signal resource configured for the target beam.

24. A user apparatus, comprising:

at least one processor; and at least one memory, configured for storing at least one program, wherein the at least one program, when executed by the at least one processor, causes the at least one processor to perform the method of any one of claims 1 to 16.

25. A base station, comprising:

at least one processor; and at least one memory, configured for storing at least one program, wherein the at least one program, when executed by the at least one processor, causes the at least one processor to perform the beam management method of any one of claims 17 to 23.

26. A computer-readable storage medium, storing a processor-executable program which, when executed by a processor, causes the processor to perform the method of any one of claims 1 to 23.

27. A computer program product, comprising a computer program or a computer instruction stored in a computer-readable storage medium which, when read from the computer-readable storage medium and executed by a processor of a computer device, causes the computer device to perform the method of any one of claims 1 to 23.

FIG. 1

| | | S110 |
| --- | --- | --- |

Receive, from a transmitting apparatus, beam reporting indication information and a plurality of test beams configured with reference signal resources

Measure the plurality of reference signal resources to obtain a plurality of pieces of beam measurement information

Select target measurement information from the plurality of pieces of beam measurement information according to the beam reporting indication information

Send the target measurement information to the transmitting apparatus, such that the transmitting apparatus predicts an optimal beam result according to the target measurement information

S120

S130

S140

FIG. 2

-CRI/SSBRI-

Beam with strong power          Selected reporting beam

FIG. 3

-CRI/SSBRI-

Beam with high power          Selected reporting beam
ratio to adjacent beams

FIG. 4

-CRI/SSBRI-

Beam with strong power          Selected reporting beam

FIG. 5

-CRI/SSBRI-

Intra-window beam
with strong total power

Selected reporting beam

FIG. 6

Bind each of the plurality of pieces of beam measurement information to
a neighborhood subset index — S134

Select the target measurement information from the plurality of pieces of
beam measurement information according to the indication information for
indicating the number of pieces of beam measurement information to be
reported and the neighborhood subset indices — S135

FIG. 7

Receive transmission pattern information sent by the transmitting
apparatus for the plurality of test beams — S1342

Determine a neighborhood subset index corresponding to each of the
plurality of pieces of beam measurement information according to the
transmission pattern information for the plurality of test beams — S1343

For each respective beam measurement information, bind the
respective beam measurement information to the neighborhood
subset index corresponding to the respective beam measurement — S1344

FIG. 8

-CRI/SSBRI-

Beam with strong power    Selected reporting beam

FIG. 9

-CRI/SSBRI-

Test beam subset with
strong total power    Selected reporting beam

FIG. 10

Group the plurality of pieces of beam measurement information into a first preset number of test beam subsets according to the indication information for indicating reporting of the beam measurement information from the plurality of dimensions — S136

Select the beam measurement information having highest quality in each of the test beam subsets as the first target measurement information, and select the remaining beam measurement information other than the beam measurement information having the highest quality in each of the test beam subsets as the second target measurement information — S137

FIG. 11

Sort the reference signal received quality of the plurality of pieces of beam measurement information in a descending order of quality to obtain a fifth measurement information sequence — S1361

Group the reference signal received quality in the fifth measurement information sequence into the first preset number of test beam subsets according to the indication information for indicating reporting of the beam measurement information from the plurality of dimensions — S1362

FIG. 12

Send, to a receiving apparatus, beam reporting indication information and a plurality of test beams configured with reference signal resources — S210

Receive target measurement information sent by the receiving apparatus — S220

Predict an optimal beam result according to the target measurement information — S230

FIG. 13

Processor 210

Memory 220

200

User apparatus

FIG. 14

FIG. 15

## INTERNATIONAL SEARCH REPORT

| International application No. |
| --- |
| **PCT/CN2023/082226** |

**A.    CLASSIFICATION OF SUBJECT MATTER**

H04W 16/28(2009.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT, DWPI: 波束, 测量, 上报, 指示, 优, 参考信号, 资源, 配置, 信号块, 数目, 数量, 预测, 质量, beam?, measur+, report+, indicat+, CSI, signal, quality, configur+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 108243430 A (VIVO COMMUNICATION TECHNOLOGY CO., LTD.) 03 July 2018 (2018-07-03)<br>description, paragraphs [0038]-[0177] | 1-27 |
| X | CN 109041251 A (ZTE CORP.) 18 December 2018 (2018-12-18)<br>description, paragraphs [0060]-[0116] | 1-27 |
| X | CN 110446232 A (RESEARCH INSTITUTE OF CHINA MOBILE COMMUNICATIONS CORPORATION et al.) 12 November 2019 (2019-11-12)<br>description, paragraphs [0125]-[0193] | 1-27 |
| X | WO 2020029296 A1 (GUANGDONG OPPO MOBILE TELECOMMUNICATIONS CORP., LTD.) 13 February 2020 (2020-02-13)<br>description, pages 2-9 | 1-27 |
| X | VIVO. "Discussion on beam measurement, beam reporting and beam indication"<br>*3GPP TSG RAN WG1 Meeting #90bis R1-1717472*, 13 October 2017 (2017-10-13),<br>section 2.1.2 | 1-27 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 May 2023** | **02 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/082226**

| Patent document cited in search report | | | Publication date (day/month/year) | Patent family member(s) | | | Publication date (day/month/year) |
|---|---|---|---|---|---|---|---|
| CN | 108243430 | A | 03 July 2018 | EP | 3562049 | A1 | 30 October 2019 |
| | | | | WO | 2018113593 | A1 | 28 June 2018 |
| | | | | US | 2019394664 | A1 | 26 December 2019 |
| CN | 109041251 | A | 18 December 2018 | None | | | |
| CN | 110446232 | A | 12 November 2019 | EP | 3790313 | A1 | 10 March 2021 |
| | | | | US | 2021243660 | A1 | 05 August 2021 |
| | | | | WO | 2019210839 | A1 | 07 November 2019 |
| WO | 2020029296 | A1 | 13 February 2020 | TW | 202013917 | A | 01 April 2020 |
| | | | | CN | 111972024 | A | 20 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210460677